# EUROPEAN PATENT SPECIFICATION

(11) **EP 0 619 658 B1**
(45) Date of publication and mention of the grant of the patent: **08.12.2004**
(21) Application number: 94302513.0
(22) Date of filing: 11.04.1994
(51) Int. Cl.: H04L 7/00, H04J 14/08

(54) **Apparatus for extracting an optical clock and apparatus for demultiplexing a time-division multiplexed signal**
Vorrichtung zur optischen Taktgewinnung und Vorrichtung zum Demultiplexen eines Zeitmultiplexsignales
Dispositif pour l'extraction d'une horloge optique et dispositif pour le démultiplexage d'un signal multiplexé par division du temps

(30) Priority: 09.04.1993 JP 8317993
(43) Date of publication of application: 12.10.1994
(73) Proprietor: NEC CORPORATION, Tokyo (JP)
(72) Inventor: Saito, Tomoki, c/o NEC Corporation, Tokyo 108-01 (JP); Henmi, Naoya, c/o NEC Corporation, Tokyo 108-01 (JP)
(74) Representative: Abnett, Richard Charles

(56) References cited:
- ELECTRONICS LETTERS, vol. 28, no. 5, XP 000292706 KAWANISHI S ET AL '10GHZ TIMING EXTRACTION FROM RANDOMLY MODULATED OPTICAL PULSES USING PHASE-LOCKED LOOP WITH TRAVELLING-WAVE LASER-DIODE OPTICAL AMPLIFIER USING OPTICAL GAIN MODULATION'
- ELECTRONICS LETTERS, vol. 29, no. 2, 21 January 1993 STEVENAGE GB, pages 231-233, XP 000331631 S. KAWANISHI ET AL. '64 to 8 Gbit/s ALL-OPTICAL DEMULTIPLEXING EXPERIMENT WITH CLOCK RECOVERY USING NEW PHASE LOCK LOOP TECHNIQUE'
- OFC '94. OPTICAL FIBER COMMUNICATION. VOL.4. 1994 TECHNICAL DIGEST SERIES. CONFERENCE EDITION (IEEE CAT. NO.94CH3422-3), 1994 CONFERENCE ON OPTICAL FIBER COMMUNICATION - OFC'94, SAN JOSE, CA, USA, 20-25 FEB. 1994, ISBN 1-55752-321-5, 1994, WASHINGTON, DC, USA, OPT. SOC. AMERICA, USA, pages 61-62, SAITO T ET AL '10-GHz timing extraction from a 20-Gbit/s optical data stream by using a newly proposed optical phase-locked loop'

## Description

This invention relates to an apparatus for synchronizing an optical clock and an apparatus for demultiplexing a time-division multiplexed signal, and more particularly, to the timing synchronization and the demultiplexing of a signal light carried out using four-wave mixing light generated in a non-linear optical medium by the signal light and a clock light.

Clock synchronization is used to provide a timing reference point for setting up synchronism between a transmitter and a receiver, and for correctly discriminating equalized signals.

In known optical communication systems, such as those described below a clock is obtained from an electric signal converted from a light signal using an optical to electric (O/E) converter.

On pages 85 and 85 of "the technology for PCM communication" published in August of 1976 by Sanpo Shuppan, a self-timing extraction method is described. In this method, an electric signal is obtained from a signal light, coded in NRZ coding to be propagated via a transmission line, by using an O/E converter; the clock component of the electric signal is emphasized by a differential turn-back circuit, so that any unnecessary frequency components are removed using a band-pass filter to provide a clock signal having a high Q value.

On pages 106 to 109 of the publication mentioned above, a method which uses a phase locked oscillator is described. In this method, a phase locked loop (PLL) comprising a phase detection circuit, a low band-pass filter, and a voltage controlled oscillator (VCO) is used; phase detection between an input signal and the output signal of the VCO is carried out in the phase detection circuit, and the output signal of the phase detection circuit is supplied to the low band-pass filter to be fed back to the VCO, so that a clock signal which is synchronous with the input signal is obtained

On pages 510 to 511 of "Electronics Letters, Vol. 28, No. 5, February, 1992", an optical signal processing system is described which can process signals at high enough speeds to cope with high speed optical communication involving data transmission rates greater than 10Gb/s. This system comprises a PLL circuit which makes use of optical correlative detection in a semiconductor optical amplifier. In this system, a pulse coded signal light of a frequency f and a clock light of a frequency (f + Δf) are supplied to the optical amplifier. where in the gain of the signal light is modulated by the clock light due to gain saturation in the amplifier. As a result, a cross-correlation between the signal and clock lights of frequency Δf is generated in the optical amplifier and output. Consequently, by detecting a phase fluctuation of the Δf component, and feeding the detected phase fluctuation back to the VCO, a clock light which is locked in phase to the signal light is obtained.

The processing of electric signals does however make it difficult to demultiplex a time sequential signal from a signal light which is time-division multiplexed to have a transmission capacity of more than several tens of Gb/s, due to the speed limitations of electric circuits.

For this reason, all optical multi/demultiplexing of signals is preferred, as described in the following publications.

On pages 231-233 of "Electronic Letters, Vol 29. No.2, January 1993", an all optical multi/demultiplexing system with 8GHz clock recovery is described which employs a phase locked loop (PLL) comprising a travelling-wave laser diode amplifier (TW-LDA).

In order to obtain the phase comparison output necessary to establish the PLL in this system, a frequency of Δf is multiplexed on the clocklight supplied to the TW-LDA and simultaneously detected in the Δf component of the light output from the TW-LDA.

A precursor to the above system is described on pages 356-357 of "Conference on Lasers and Electro-optics, 1991 Technical Digest Series, Volume 10".

On pages 462 to 464 of "Electronics Letters, Vol. 27 No. 11, May 1991", a four-wave mixing switch is described in which a signal light and a clock light are supplied to an optical fibre, wherein four-wave mixing occurs in the optical fibre dependent on the overlapping degree of pulses between the signal and clock lights.

On pages 962 to 964 of "Electronics Letters, Vol. 26 No. 14, July, 1990", a non-linear optical fibre loop mirror in which signal lights are propagated in both directions, and a clock light is propagated in just one direction is described: the signal light propagating in the same direction as the clock light is subject to cross phase modulation; the signal light thus modulated and the signal light propagating in the opposite direction are then interfered to provide a switching operation

On pages 1186 to 1198 of "IEEE Journal of Selected Areas in Communications, Vol. 5, No. 7", an optical Kerr switch is described. In the optical Kerr switch, linearly polarized signal and clock lights, having an angle of 45° between them, are supplied to an optical fibre. The polarization of the signal light is rotated by 90° provide a switching operation using the different cross phase modulations between a component of the signal light parallel to the polarization of the clock light and an orthogonal component thereof.

On pages 340 to 341 of "Electronics Letters, Vol. 24 No. 6, March 1988", a Mach-Zehnder type optical switch is described. In this optical switch, one of two divided signal lights is supplied to a non-linear optical medium along with a clock ligh; the signal light is shifted in phase in the non-linear optical medium through cross phase modulation, and the cross phase modulated signal light and the remaining one of the two divided signal lights are then interfered to provide a switching operation.

However, clock extraction apparatus using the self-timing method or employing a phase locked oscillator has the disadvantage that the operation frequency is several tens of GHz at most, and it is difficult to extract a clock from a ultra-high speed signal light of 100Gb/s, for instance.

Optical PLL circuits which comprises a semiconductor optical amplifier have the disadvantage that the operation frequency is limited to several tens of GHz at most by the semiconductor optical amplifier. Further, an additional clock light generator is required to generate the clock light of frequency f locked in phase to the signal light, because the repetition frequency of the obtained clock light is (f + Δt) due to the frequency component Δf having been superposed on the output signal of the VCO.

Furthermore, optical time-division demultiplexing apparatus have the disadvantage that phase lock between the signal and clock lights is required to facilitate the conventional optical clock extracting apparatus. This results in large size, high cost and large power consumption.

According to a first aspect of the present invention there is provided a method for synchronizing an optical clock to a signal, comprising the steps of generating a clock signal of a frequency dependent on a control voltage; generating, in response to the clock signal, a clock light, represented by an intensity modulated light which is synchronous with the clock signal; combining a pulse coded signal light and the clock light; applying the combined pulse coded signal light and the clock light to a non-linear optical medium for generating a number of output lights where at least one of the output lights is a four-wave mixing light, the time-mean power value of the four-wave mixing light being a measure of the phase difference between the clock light and the pulse coded signal light; extracting from the output lights of the non-linear optical medium, four-wave mixing light generated in the non-linear optical medium; and generating the control voltage dependent on the extracted four-wave mixing light, wherein the control voltage is used to generate the clock signal such that the clock signal and the clock light are locked in phase to the pulse coded signal light and have a clock frequency of one Nth or N times the clock frequency of the pulse coded signal light, where N is an integer.

A second aspect of the present invention, as set forth in claims 3, 4, 5 and 13 to which reference should now be made, provides demultiplexing methods which utilize the synchronisation method according to the first aspect of the invention.

The present invention, as set forth in Claims 6, 10, 11, 12 and 16 to which reference should now be made, also provides apparatus for use in the above methods.

Advantageous features are set forth in the appendant claims.

The invention will be explained in more detail in conjunction with appended drawings, wherein:
Fig. 1 is a block-diagram showing a first preferred apparatus for extracting an optical clock according to a first aspect of the invention;
Figs. 2A to 2C are spectrum diagrams showing the wavelenghts of the signal light, the clock light and the four-wave mixing light in Fig. 1,
Figs. 3A to 3D illustrate the relation between power of the four-wave mixing light and phase difference between the signal and clock lights in Fig. 1;
Figs. 4A and 5 are block diagrams showing second and third preferred apparatus for extracting an optical clock according to a first aspect of the invention;
Fig. 4B is a graph showing the bit error rate performance of the apparatus shown in Fig. 4A;
Fig. 6 is a block diagram showing a first preferred apparatus for demultiplexing a time-division multiplexed signal in the according to a second aspect of the invention,
Fig. 7 is an explanatory diagram explaining the operation of the apparatus shown in Fig. 6;
Fig. 8 is a block diagram showing a second preferred apparatus for demultiplexing a time-division multiplexed signal according to the second aspect of the invention
Figs. 9A to 9D are spectrum diagrams for showing the wavelengths of the signal light, the clock light, and the four-wave mixing light in Fig. 8;
Fig. 10 is an explanatory diagram explaining the operation of the apparatus shown in Fig. 8; and
Figs. 11 and 12 are block diagrams showing third and fourth preferred apparatus for demultiplexing a time-division multiplexed signal according to the second aspect of the invention.

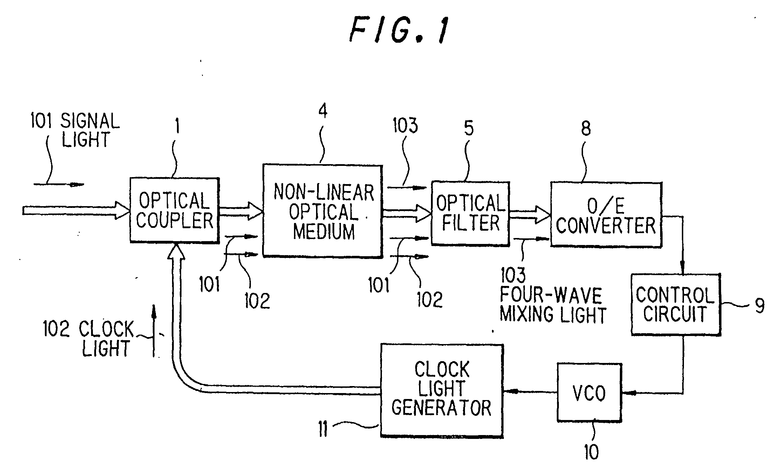

Fig. 1 shows a first preferred apparatus for extracting a clock light from a signal light.

The apparatus comprises an optical coupler 1, an optical non-linear medium 4, an optical filter 5, an optoelectric (O/E) converter B, a control circuit 9, a voltage controlled oscillator (VCO) 10, and a clock light generator 11.

A signal light 101, is produced by modulating a pulse-coded signal into the output light of a semiconductor laser lasing with a single mode using a LiNbO₃ optical modutator. The signal light is modulated to have a data rate of 20 Gb/s, a mark ratio of 1/2, and a pulse width of 25ps in the form of RZ code and is supplied to the optical coupler 1. A clock light 102, has a repetition frequency of 20 GHz, and a pulse width of 25ps, which are the same as those of the signal light 1, and is also supplied to the optical coupler 1. The clock light 102 is generated in the clock light generator 11 utilizing a gain switch as a pulse light source driven by an electric signal of frequency 20GHz supplied from the VCO 10.

The signal light 101 having a wavelength λs of 1.554 µm and the clock light 102 having a wavelength λc of 1.550 µm are combined in the optical coupler 1, from which the output light is incident on the non-linear optical medium 4. This is a silica-based single mode optical fibre having a length of 10 km and a zero-dispersion wavelength of 1.552 µm. The peak powers of the signal and clock lights 101 and 102 are set to be +40mW at the input of the non-linear optical medium 4, in which four-wave mixing occurs, to provide two four-wave mixing lights 103 having wavelength λm₁ and λm₂ of 1.546µm (2λc - λs) and 1.558 µm (2λs - λc) as output lights along with the signal and clock lights 101 and 102. Of the output lights of the non-linear optical medium 4, only the four-wave mixing light 103 of wavelength, λm₁ passes through the optical filter 5 and is extracted. The extracted four-wave mixing light 103 is received by the O/E converter and is supplied as an electric signal to the control circuit 9 , from which a control signal is supplied to the VCO 10. Thus, an optical phase locked loop (optical PLL) is structured.

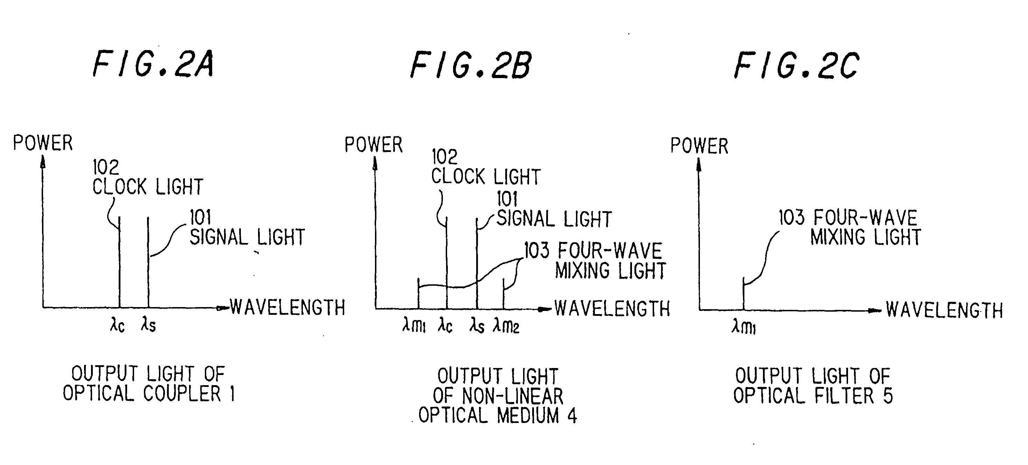

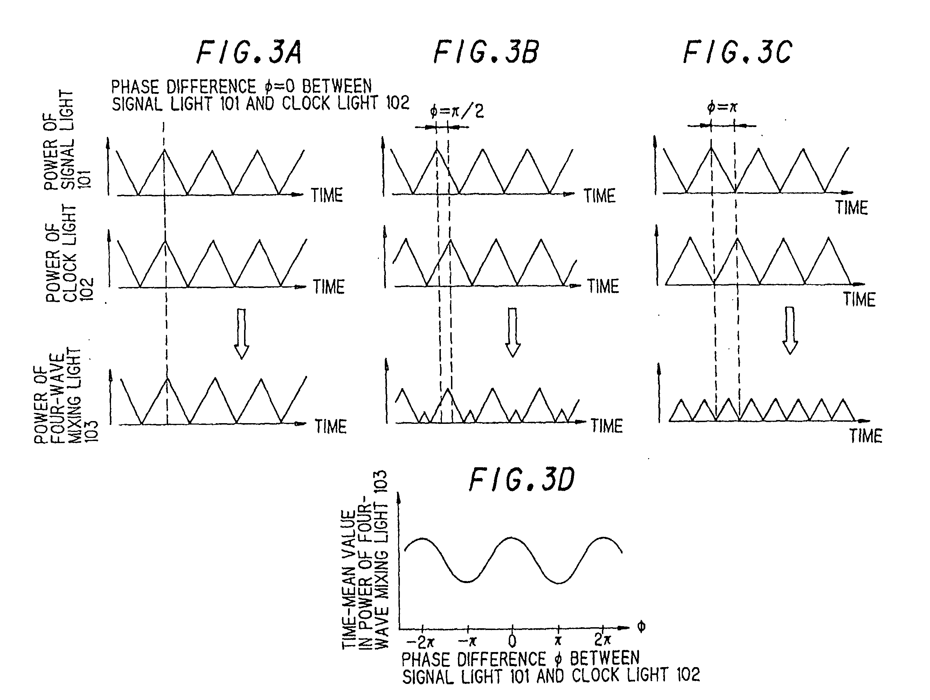

Operation will be explained in more detail in Figs. 2A to 2C, and Figs. 3A to 3D. Fig. 2A shows the signal and clock lights 101 and 102 (λc and λs) supplied from the optical coupler 1, Fig. 2B shows the signal and clock lights 101 and 102 (λc and λs) and the four-wave mixing lights 103 (λm₁ and λm₂) supplied from the non-linear optical medium 4, and Fig. 2C shows the four-wave mixing light 103 (λm₁) extracted by the optical filter 5.

The power of the four-wave mixing light 103 is dependent on the phase difference Φ between the signal and clock lights 101 and 102 as shown in Figs. 3A to 3D. Fig. 3A shows the case where the phase difference Φ between the signal and clock lights 101 and 102 is zero, and the resulting time-mean power of the four-wave mixing light 103 is a maximum; Fig. 3B shows the case where the phase difference Φ is π/2, and the time-mean power of the four-wave mixing light 103 is lower than the maximum value; and Fig. 3C shows the case where the phase difference Φ is π, and where the time-mean power of the four-wave mixing light 103 is a minimum.

Thus, the time-mean value of power of the four-wave mixing light 103 is dependent on the phase difference Φ as shown in Fig. 3D.

As will be understood from the above explanation, the phase lock between the signal and clock lights 101 and 102 is obtained by converting the four-wave mixing light 103 to an electric signal in the O/E converter 8 and feeding the electric signal via the control circuit 9 to the VCO 10.

Use of the first preferred timing extracting apparatus, ensures that the phase difference of the clock light 102 and the electric clock signal for generating the clock light 102 relative to the signal light 101 are kept constant even when the frequency of the clock signal in the signal source which drives the LiNbO₃ optical modulator fluctuates to some extent.

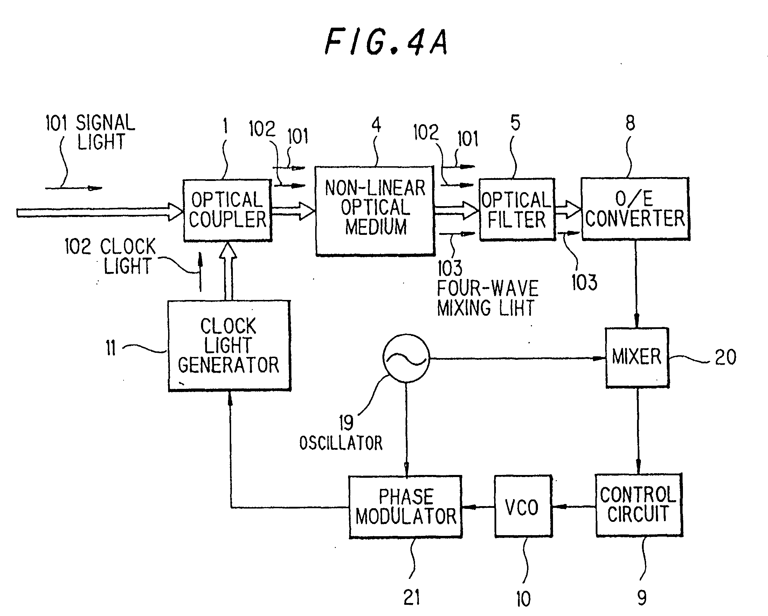

Fig. 4A shows a second preferred apparatus for extracting a clock light, wherein like parts are indicated by like reference numerals as used in Fig. 1, and the apparatus further comprises an oscillator 19, a mixer 20, and a phase modulator 21.

A signal light 101 is produced by modulating a pulse coded signal into the output light of a semiconductor laser lasing with a (single) mode using a LiNbO₃ optical modulator. The signal is modulated to have a data rate of 20 Gb/s, a mark ratio of 1/2, and a pulse width of 20ps in the form of RZ code and is supplied to the optical coupler 1. A clock light which produced by modulating an intensity-modulated signal into the output light of a semiconductor laser lasing with a single mode using a LiNbO₃ optical modutator. The clock light is modulated to have a repetition frequency of 20GHz which is the same as the clock frequency of 20GHz for the signal light 101. The clock generator 11 is driven by an electric output signal of frequency 20GHz supplied from the VCO 10; the output signal of the VCO 10 is phase modulated by the phase modulator 21 driven by an oscillation signal of frequency 100kHz supplied from the oscillator 19.

The signal light 101 having a wavelength λs of 1.554µm and the clock light 102 having a wavelength λc of 1.550µm are combined in the optical coupler 1. The combined signal and clock lights 101 and 102 each having a peak power of +40mW are supplied to an input of the non-linear optical medium 4 of a silica-based single mode optical fibre having a length of 10km and a zero-dispersion wavelength of 1.552µm. From the non-linear optical medium four-wave mixing lights 103 having a wavelength λm₁ (= 2λc - λs) of 1.546 µm and a wavelength λm₂ (= 2λs - λc) of 1.558µm respectively are obtained along with the signal and clock lights 101 and 102. Of the output lights of the non-linear optical medium 4, only one of the four-wave mixing lights 103 passes through the optical filter 5 and is extracted. The extracted four-wave mixing light 103 is converted to an electric signal in the O/E convertor 8, and the electric signal is then supplied to the mixer 20 together with an output signal of, the oscillator 19. In the mixer 20, a voltage is generated in dependence on the phase difference between the signal and clock lights in accordance with synchronous detection. The voltage generated is supplied from the mixer 20 to the control circuit 9, from which a control signal is supplied to the VCO 10. Thus, an optical phase locked loop (optical PLL) is structured.

As explained in Figs. 3A to 3D, the time-mean value of power for the four-wave mixing light 103 is a maximum when the phase difference is zero between the signal and clock lights 101 and 102, and minimum when the phase difference is π.

In the phase modulator 21, a signal of 100kHz is superposed on the output signal of the VCO 10, so that a phase modulation of repetition frequency 100kHz is applied to the clock light 102. The phase-modulation component is represented on the four-wave mixing light 103, so that the phase difference Φ is detected between the signal and clock lights 101 and 102 by synchronous detection in the mixer (phase comparator) 20 supplied with the output signals of the O/E converter 8 and the oscillator 19. The output signal of the mixer 20 is supplied via the control circuit 9 to the VCO 10, so that the phase lock between the signal and clock lights 101 and 102 is achieved.

Use of the second preferred timing extracting apparatus, ensures that the clock light 102 and the related electric clock signal are locked in phase to the signal light 101, even when the clock frequency of the signal source driving the LiNbO₃ optical modulator fluctuates to some extent.

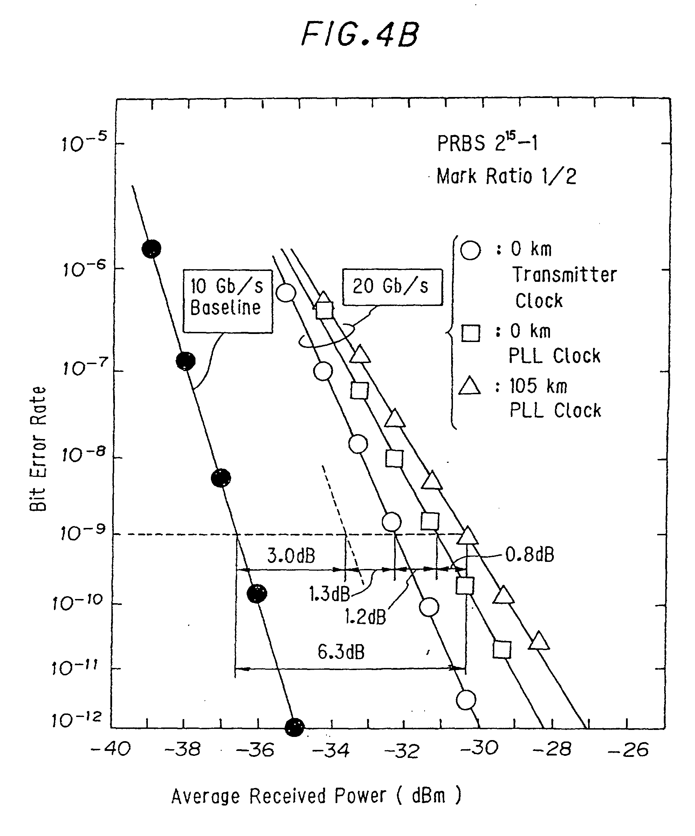

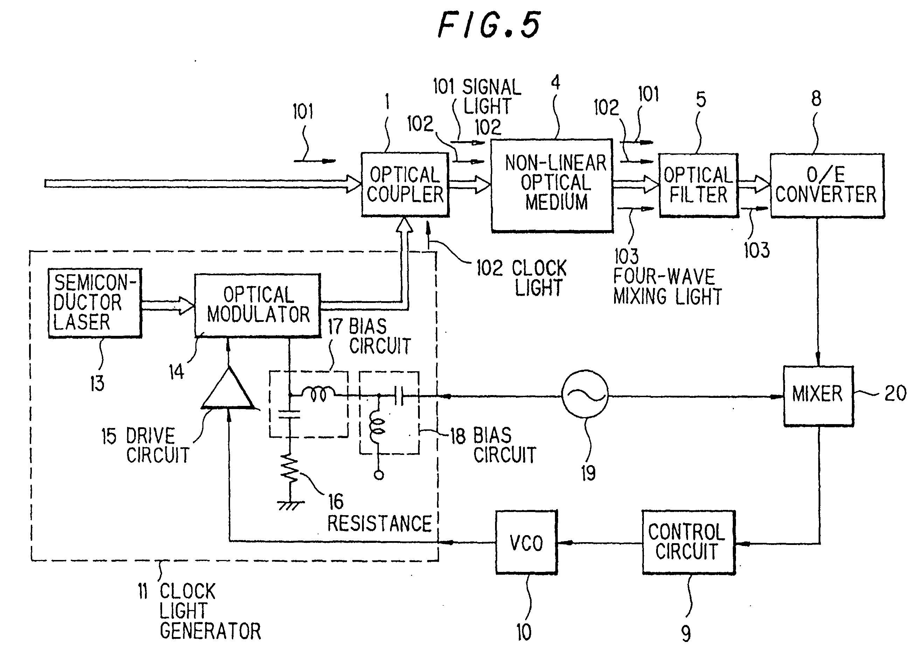

Fig. 5 shows a third preferred apparatus for extracting a clock light, wherein like parts are indicated by like reference numerals as used in Fig. 4, and the clock light generator 11 further comprises a semiconductor laser 13, a LiNbO₃ optical modulator 14, a drive circuit 15, a resistance 16, and bias circuits 17 and 18.

In this apparatus, the signal light 101 is the same as that used previously in the first and second preferred apparatus; the clock light 102 is similarly generated in the clock light generator 11 by intensity modulating the output light of the semiconductor laser 13 lasing with a single mode in the LiNbO₃ optical modulator 14 driven by the drive circuit 15. The frequency of the clock light 102 is the same as that of the signal light 101.

In setting the operation point of the LiNbO₃ optical modulator 14, the two bias circuits 17 and 18 are used to superpose an intensity modulation signal of 100kHz on the clock light 102. The first bias circuit 17 biases the clock light 102 of 20 GHz, and the second bias circuit 18 biases the output signal of 100kHz supplied from the oscillator 19. As shown in Fig. 5, the first bias circuit 17 is connected via the 50Ω resistance 16 to ground.

The signal light 101 having a wavelength λs of 1.554µm and the clock light 102 having a wavelength λc of 1.550µm are combined in the optical coupler 1; the combined signal and clock lights 101 and 102 are then supplied to the non-linear optical medium 4 of a silica-based single mode optical fibre having a length of 10km and a zero-dispersion wavelength of 1.552 µm; the input peak power levels of the signal and clock lights 101 and 102 are set to be +40mW. In the non-linear optical medium 4, four-wave mixing occurs between the signal and clock lights 101 and 102, and four-wave mixing lights 103 having a wavelength λm₁(= 2λc - λs) of 1.546µm and λm₂(=2λs - λc) of 1.558 µm are obtained at the output of the non-linear optical medium 4.

Of the signal and clock lights 101 and 102, and the four-wave mixing lights 103, only the four-wave mixing light 103 of wavelength λm₁ passes through the optical filter 5 and is converted in to an electric signal in the O/E converter 8. The output signals of the O/E converter 8 and the oscillator 19 are supplied to the mixer 20, in which a voltage is generated in dependence on the phase difference between the signal and clock lights 101 and 102. The output signal of the mixer 20 is supplied to the control circuit 9, from which a control signal is fed back to the vco 10. Thus, an optical PLL is structured.

In operation, the relation between power and wavelength and between the time-mean power of the four-wave mixing light and phase difference as explained in Figs. 2A to 2C and 3A to 3D are utilized in the third preferred apparatus.

In the third preferred apparatus, the 100kHz signal 100kHz which is the output from the oscillator 19 is superposed on the LiNbO₃ optical modulator 14, so that an intensity-modulation of 100kHz is superposed on the clock light 102. This intensity-modulation component is present in the four-wave mixing light 103.

The output signal of the O/E converter 8 and the oscillator 19 are supplied to the mixer 20 where synchronous detection is used to derive the phase difference Φ between the signal and clock lights 101 and 102.

The output signal of the mixer 20 is supplied via the control circuit 9 to the vCO 10, thereby to lock the signal and clock lights 101 and 102 in phase.

Use of the timing extracting apparatus of the third preferred embodiment, ensures that the electric clock signal and the clock light 102 are kept locked in phase to the signal light 101, even when the clock frequency of the signal source for driving the LiNbO₃ optical modulator fluctuates to some extent.

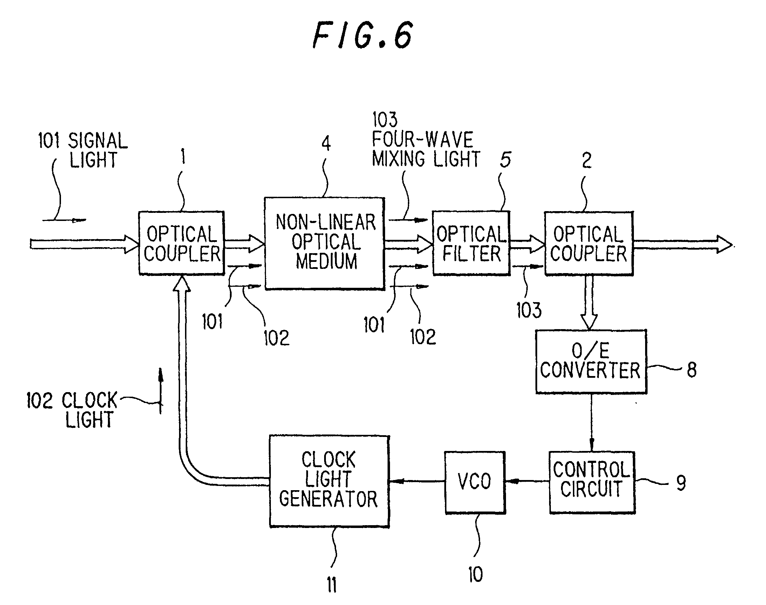

Fig. 6 shows a first preferred apparatus for demultiplexing an optical time-division multiplexed signal according to the second aspect of the invention. The apparatus comprises optical couplers 1 and 2, a non-linear optical medium 4, an optical filter 5, an O/E converter 8, a control circuit 9, a VCO 10, and a clock light generator 11.

In the demultiplexing apparatus, a signal light 101 having a data rate of 40Gb/s is obtained by time division multiplexing four sequential signals. Each of the four sequential signals is obtained by dividing a short pulse, generated by a gain switch of a semiconductor laser, into four signals having a repetition frequency of 10GHz and a pulse width of 10ps, and by modulating each of the four-divided signals using a LiNbO₃ optical modulator to have a data rate of 10GHz, a mark ratio of 1/2 and a pulse width of 10ps in the form of RZ code. In time-division multiplexing of the signal light 101, an appropriate time difference is assigned between adjacent sequential signals by an optical variable delay device, which is an optical fibre stretcher in this case; the sequential signals thus processed are combined in an optical coupler so that they don't overlap each other. The clock light 102 has a repetition frequency of 10GHz which is one quarter of the clock frequency of the signal light 101 and equal to the clock frequency of the sequential signals to be combined, and a pulse width of 10ps equal to that of the signal light 101.

The clock light 102 as explained above is generated in the clock light generator 11, which is driven by an electric signal of frequency 10GHz supplied from the VCO 10 and which comprises a gain switch of a semiconductor laser for the pulse light source.

The signal light 101 having a wavelength λs of 1.554 µm and the clock light 102 having a wavelength λc of 1.550µm are combined in the first optical coupler 1, from which the combined signal and clock lights 101 and 102 are supplied to the non-linear optical medium 4 of a silica-based single mode optical fiber having a length 10km and a zero-dispersion wavelength of 1.552µm. At the input of the non-linear optical medium 4, the peak power levels of the signal and clock lights 101 and 102 are set to be +40mW. The four-wave mixing lights 103 obtained from the non-linear optical medium have a wavelength λm₁ (= 2λc - λs) of 1.546 µm and λm₂ (2λs - λc) of 1.558µm as explained before. Only the four-wave mixing light 103 having wavelength λm₁ is passed through the optical filter 5, and is subsequently divided into two four-wave mixing lights by the second optical coupler 2. One of the two divided lights is an output light, while the other divided light is supplied to the O/E converter 8, from which an electric signal is supplied to the control circuit 9.

A control signal is supplied to the VCO 10 from the control circuit, to complete the optical PLL.

The relationship between power and wavelength and between time-mean power of the four-wave mixing light and phase difference as explained in Figs. 2A to 2C and 3A to 3D are utilized in this arrangement also.

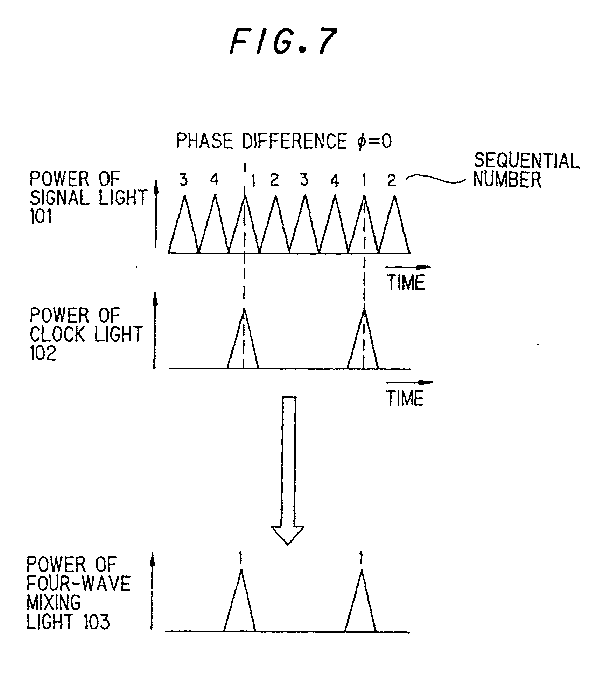

Fig. 7 shows the signal light 101 comprising first to fourth sequential lights, numbered by 1 to 4, and the clock light 102 which is coincident with the first sequential signal 1. Consequently, the four-wave mixing light 103 is generated at a timing common to that of the first sequential signal of the signal light 101 and the clock light 102.

Thus, use of the first preferred demultiplexing apparatus ensures that the phase lock between the clock light 102 and a sequential light of the signal light 101 is achieved, so that one sequential signal of 10GHz may be demultiplexed from the signal light 101 of 40GHz.

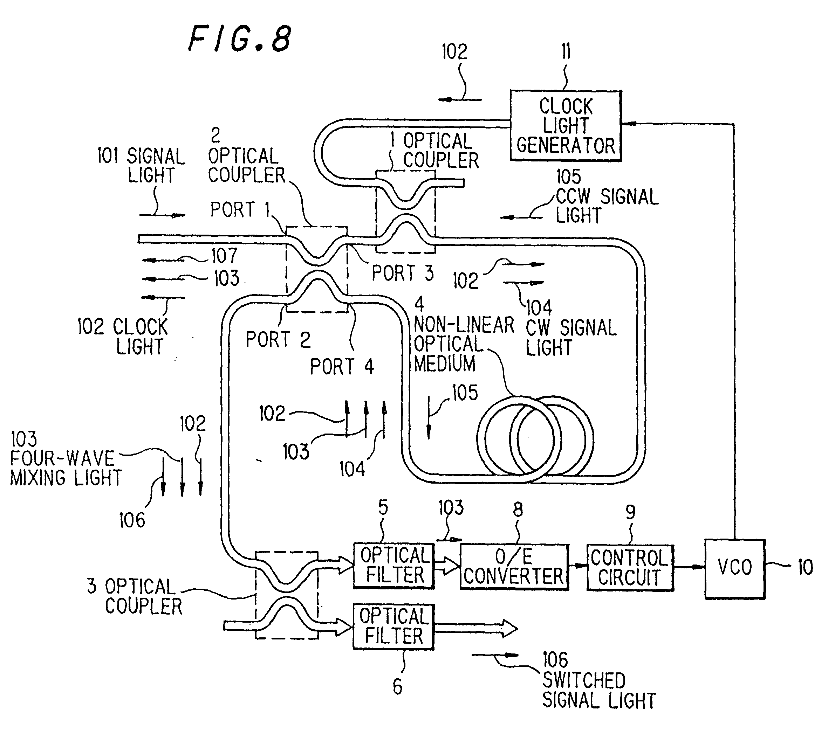

Fig. 8 shows a second preferred apparatus for demultiplexing a time-division multiplexed signal according to the second aspect of the invention.

The demultiplexing apparatus comprises optical couplers 1, 2 and 3, a non-linear optical medium 4, optical filters 5 and 6, an O/E converter 8, a control circuit 9, a VCO 10 and a clock light generator 11.

A signal light 101 which is the same as that used in the first preferred apparatus is supplied to a port 1 of the optical-fibre-type first optical coupler 2 to be divided into two signal lights at ports 3 and 4 thereof. The resulting first signal light 104 which is supplied from the port 3 of the first optical coupler 2 and the clock light 102 which is the same as that used in the first preferred embodiment are combined in the second optical coupler 1; the output lights of which are then supplied to the non-linear optical medium 4 of a silica-based single mode optical fibre having a length of 10km and a zero-dispersion wavelength of 1.552µm; at the input of the non-linear optical medium the peak power levels of the signal and clock lights 104 and 102 are set to be +40mW.

In the non-linear optical medium 4, both the first signal light and the clock light travel in a clockwise (CW) direction and four-wave mixing occurs between the first (CW) signal light 104 and the clock light 102. As a result, at the output of the non-linear optical medium 4, four-wave mixing lights 103 having wavelength λm₁ (= 2λc - λs) and λm₂ (= 2λs - λc) of 1.546λm and 1.558µm respectively are supplied along with the clock light 102 and the CW signal light 104 which is phase-shifted by an amount dependent on the peak intensity of the clock light 102. The CW clock light 102, the CW four-wave mixing light 103, and the CW signal light 104 are supplied to the port 4 of the optical coupler 2, while the second signal light 105 supplied from the port 4 of the optical coupler 2 propagates through the non-linear optical medium 4 in a counter clokwise (CCW) direction to arrive at the port 3 of the optical coupler 2.

The CW and CCW signal lights 104 and 105 supplied to the ports 4 and 3 of the optical coupler 2 are interfered with each other, and the interfered light is obtained at the port 1 of the optical coupler 2 in case of zero in phase difference between the CW and CCW signal lights 104 and 105, and at the port 2 thereof in case of π in phase difference. The interfered light obtained at port 1 is a non-switched signal light 107 in which the CW signal light 104 has not been phase shifted by the clock light 102, and the interfered light obtained at the port 2 is a switched light 106 in which π for the CW signal light 104 has been phase shifted by TT by the clock light 102. In addition, the clock light 102 and the four-wave mixing light 103 are each divided into two lights by the optical coupler 2. Consequently, the lights supplied from port 1 of the optical coupler 2 are the non-switched signal light 107, the clock light 102, and the four-wave mixing light 103, from which only the non-switched signal light 107 is extracted to be supplied to a next stage for demultiplexing a time-division multiplexed signal by an optical filter. In an alternative embodiment of the invention a polarizing beam splitter is used in place of optical coupler (2) to obtain the switched and non-switched lights (106-107).

The lights supplied from port 2 of the optical coupler 2 are the switched light 146, the clock light 102, and the four-wave mixing light 103. These are each divided into two sets of lights by optical coupler 3, each set being supplied to one of two optical filters. Only the four-wave mixing light 103 is extracted by the first optical filter 5, and only the switched signal light 106 is extracted by the second optical filter 6. The output four-wave mixing light from the first optical filter 5 is received in the O/E converter 8 to provide on electric signal which is supplied to the control circuit 9, from which a control signal is supplied to the VCO 10. Thus, an optical PLL is structured.

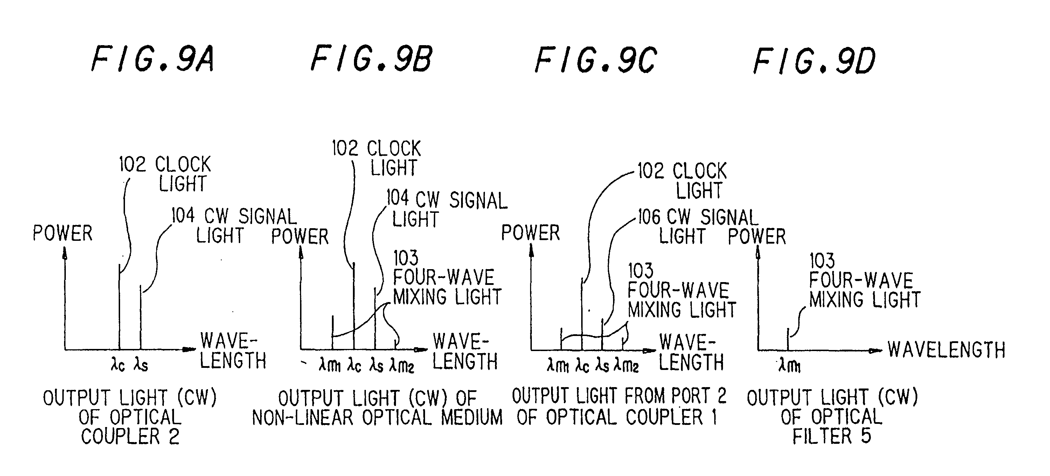

Operation of this apparatus will now be explained with referrence to Figs. 9A to 9D. In Fig. 9A, the CW signal light 104 of wavelength λs and the clock light 102 of wavelength λc supplied from the second optical coupler 2 are shown, and in Fig. 9B, the CW signal light 104 and clock light 102, and the four-wave mixing lights 103 of wavelength λm₁ and λm₂ are shown as output from the non-linear optical medium 4. The clock light 102, the CW signal light 106, and the four-wave mixing light 103, as obtained from the port 2 of the first optical coupler 1, are shown in Fig. 9C, and finally the four-wave mixing light 103 of wavelength λm₁ obtained from the optical filter 5, is shown in Fig. 9D.

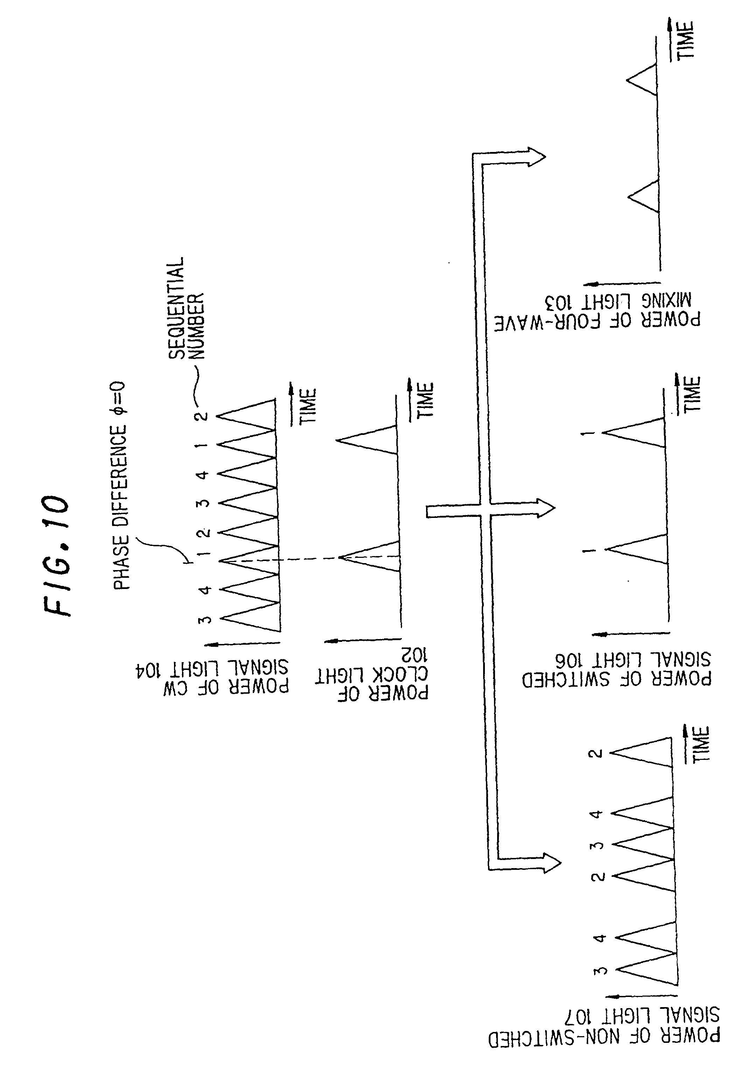

As shown in Fig. 10, the CW signal light 104 comprises four time sequential signals, numbered 1 to 4, and the clock light 102 has a repetition frequency of one quarter that of the CW signal light 104. In this case, the clock light 102 is in phase with sequential signal 1 of the CW signal light 104 (corresponding to the first of the four time slots). Consequently, the switched signal light 106 (sequential signals 1) is obtained at port 2 of the optical coupler 2, and the non-switched signal light 107 (comprising sequential signals 2 to 4) is obtained at port 1 of the optical coupler 2, respectively, as shown thereof. Fig. 10 also shows the four-wave mixing light 103 supplied from the optical filter 5.

In this arrangement, the clock light 102 may be arranged to be in phase with any one of sequential signals 2 to 4, providing there is no phase difference between the signal light 101 and the clock light 102.

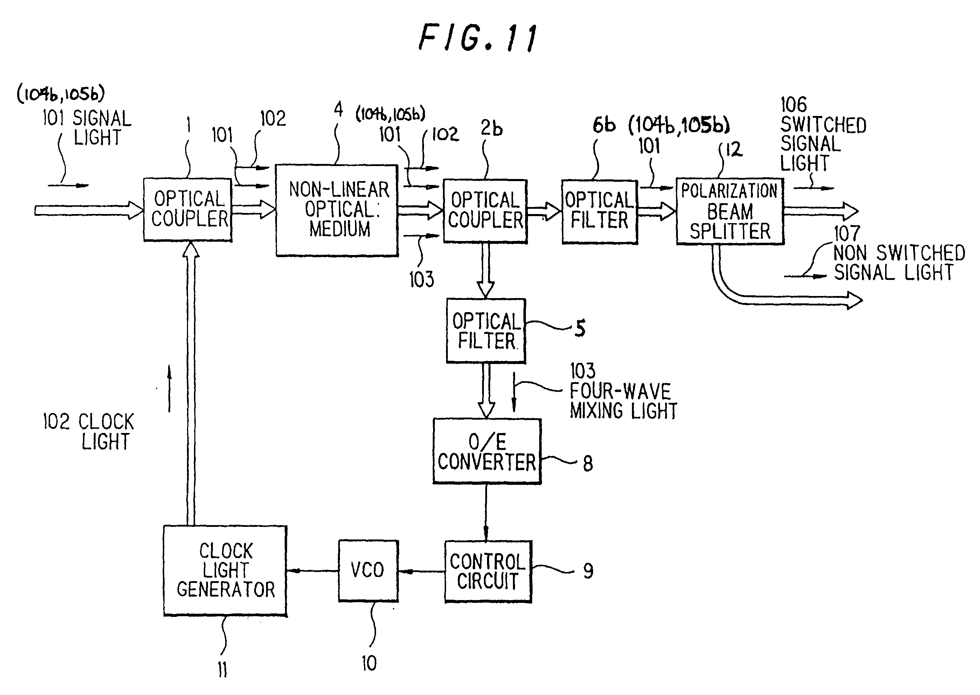

Fig. 11 shows third preferred apparatus for demultiplexing a time-division multiplexed signal according to the second aspect of the invention. The demultiplexing apparatus comprises optical couplers 1 and 2, a non-linear optical medium 4, optical filters 5 and 6b an O/E converter 8, a control circuit 9, an VCO 10, a clock light generator 11, and a polarization beam splitter 12.

In this apparatus, a signal light 101 and a clock light 102 are combined in the first optical coupler 1 and supplied to the non-linear optical medium 4 of a silica-based single mode optical fibre having a length of 10km and a zero-dispersion wavelength of 1.552µm as in the first preferred embodiment. At the input of the non-linear optical medium 4, the peak power of the signal light 101 is set to be +40mW, and that of the clock light 102 is set to be +50mW. The output lights of the non-linear optical medium 4 are each divided into two sets of lights by optical coupler 2, each set of lights being supplied to one of two optical filters 5 and 6b. Only the signal light 101 is extracted from the set by the first optical filter 6b, and only the four-wave mixing light 103 is extracted from the other set by the second optical filter 5. The signal light 101 is supplied from the first optical filter 6b to the polarization beam splitter 12, from which a switched signal light 106 and a non-switched signal light 107 are obtained. The four-wave mixing light 103 is supplied from the second optical coupler 5 to the O/E converter 8, from which an electric signal is supplied to a control circuit 9. A control signal is supplied from the control circuit 9 to the VCO 10, to complete the an optical PLL.

In this apparatus, the timing extracting operation is the same as that employed in the first and second preferred apparatus.

The demultiplexing operation, makes use of the phenomenon in which the phase shift amounts induced by cross phase modulation are different for the polarization component (104b) of the signal light 101 parallel to the clock light 102 and a polarization component (105b) of the signal light 101 orthogonal to the clock light. When the phase difference of the two components is π, the signal light 101 is rotated in polarization between the input and the output of the non-linear optical medium 4 by 90°. For this reason, when the signal light 101 is supplied to the polarization beam splitter 12, signal light 106 which is switched by the clock light 102 and signal light 107 which is not switched by the clock light 102 are obtained from the polarizing beam splitter 12.

Use of the demultiplexing apparatus, ensures that the clock light 102 is locked in phase to the signal light 101, and a time sequential signal of 10Gb/B is obtained from the time division multiplexed signal light 101 of 40Gb/s.

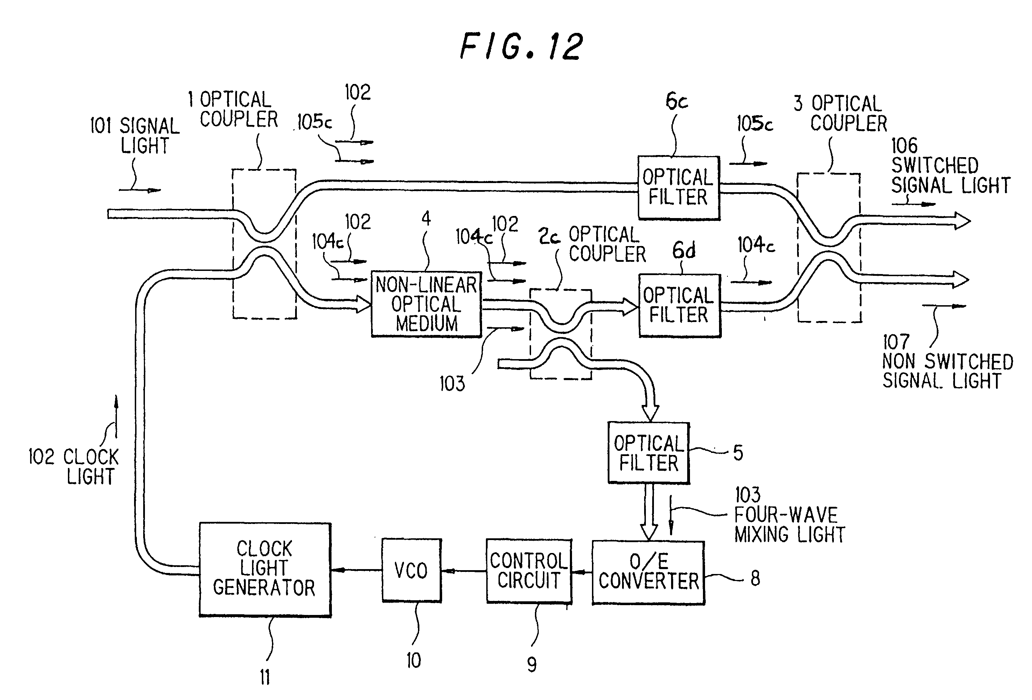

Fig. 12 shows fourth preferred apparatus for demultiplexing a Fig. 12 shows fourth preferred apparatus for demultiplexing a time-division multiplexed signal according to the second aspect of the invention. The demultiplexing apparatus comprises optical couplers 1, 2 and 3, a non-liner optical medium 4, optical filters 5, 6c and 6d, an O/E converter 8, a control circuit 9, a VCO 10, and a clock light generator 11.

In this apparatus, the signal light 101 is set to have a peak power level of +40mW at the input of the non-linear optical medium; similarly the clock light 102 is set to have a peak power level of +40 mW at input.

In this apparatus, the timing extracting operation is similar to that used in the first to third preferred apparatus; the demultiplexing operation is achieved by utilizing the phase shift in the signal light 101 induced by cross phase modulation relative to the clock light 102 in the non-linear optical medium. In the demultiplexing operation, when the phase shift amount is π, the signal lights 104c and 105c supplied from the second and third optical filters 6c and 6d are interfered in the third optical coupler 3 to provide a signal light 106 which is switched by the clock light 102 at one port of the third optical coupler 3 and to provide a signal light 107 which is not switched by the clock light 102 at the other port.

Use of this apparatus, ensures the same result as that obtained in the first to third preferred apparatus. The structure of the timing extracting apparatus and the demultiplexing apparatus, as described above with reference to the preferred apparatus, may be modified as set out below.

The non-linear optical medium 4 is not limited to a silica-based single mode optical fibre, but may instead be a semiconductor optical amplifier, or an inorganic or organic apparatus having third order non-linear optical effects. Further, a polarization-maintaining optical fibre or any other type of optical fiber may be used for the non-linear optical medium. In such optical fibres, the zero-dispersion wavelength may be 1.56µm, 1.3µm, or any other wavelength providing the non-linear optical effect obtained from the signal and clock lights 101 and 102 is sufficient.

The peak power levels of the signal and clock lights 101 and 102 may be +20mW, +40mW, or any other value at the input of the non-linear optical medium 4, providing the non-linear optical effect is generated. The optical power may be amplified by using an Er-doped optical fibre or a semiconductor optical amplifier as the non-linear optical medium 4, providing the non-linear optical effect obtained is sufficient.

An optical amplifier may be used at an appropriate position for amplification purpose.

The wavelength of the signal or clock light 101 or 102 may be 1.3µm, 1.555µm, or other values.

The signal light 101 may be modified as set out below. That is, the data bit rate may be 5Gb/s or 100Gb/s; the number of time-division multiplexing signals is not limited to 4, and may be 2 or 10; NRZ coding may be used in place of RZ coding; the mark ratio is not limited to 1/2, and may be 3/8 or 1/8; the pulse width is not limited to 25ps or 10ps, and may be 100ps or 5ps, providing it is less than one time slot of a clock frequency of the signal light 101; the form of pulse may be a short pulse having a small duty ratio, a sine-wave pulse, or other forms, as long as it functions as a signal light; and the extinction ratio may be 10dB, or 20dB.

The clock light 102 may be modified as set out below. The division ratio of the clock frequency of the clock light 102 relative to the clock frequency of the signal light 101 is not limited to 4, and may be 2 or 20.

The clock frequency of the clock light 102 may be a value multiplexing the clock frequency of the signal light 101 such that the clock frequency is one Nth or Ntimes the clock frequency of the signal light, where N is an integer. The same changes possible for the signal light 101 may be applied to the pulse width, the pulse form, the extinction ratio, etc. of the clock light 102.

An optical fibre squeezer may be used to control the polarization at least one of the signal and clock lights 101 and 102, so that the maximum non-linear optical effect which is dependent on polarization, is obtained.

The light received by the O/E converter 8 is not limited to the four-wave mixing light 103, but may be the signal or clock light 101 or 102, the time-mean power value of the light 101 or 102 is reduced at the output of the non-linear optical medium 4 due to the generation of the four-wave mixing light 103. In this case, the minimum value may be controlled to maximize the overlapping degree of the signal and clock lights 101 and 102 by the control circuit 10 in the demultiplexing apparatus.

The optical couplers 1, 2 and 3 may be a reflection-film-type or other type in place of the optical fibre type.

The optical filters 5, 6 and 7 may be an interference-film-type, a Fabry-Perot type, or other types.

The O/E converter 8 may be a p-i-n photodiode, an avalanche photodiode, or other types.

A pulse light source in the clock light generator 11 is not. limited to a semiconductor laser using a gain switch, but it may be modified as set out below.

It may be a semiconductor laser using a mode lock as a short pulse generator, a ring laser, or other device which is driven by the output signal of the VCO10 to provide appropriate repetition frequency and pulse width. When the desired repetition frequency and pulse width are not obtainable from the light source, a repetition frequency may be generated by branching the light from the light source in an optical coupler, applying a delay to the branched light, and combining the delayed light to the light from the light source; the pulse width may be regulated by pulse compression technology using grating pair, or high order solitons. Further, the clock pulse 102 is not limited to a short pulse light, and may be an intensity modulated light which is obtained by using an external modulator, such as the LiNbO₃ optical modulator 14, or an electric field absorption type semiconductor optical modulator; the intensity modulation index may be varied providing the non-linear optical effect is obtained.

In the preferred apparatus shown in Figs. 4 and 5, the oscillation frequency of 100kHz in the oscillator 19 may be changed to be, for instance, 1MHz, or 10kHz, providing synchronous detection is achieved.

The non-linear switch used in the demultiplexing apparatus is not limited to a non-linear optical fiber loop mirror, an optical Kerr switch, or other types using the signal and clock lights 101 and 102 having different wavelengths.

As described above, advantages of the timing extracting apparatus and the demultiplexing apparatus are summarized below.
(1) Ultra-high speed operation of the order of THz is possible by selecting a non-linear medium, because the non-linear optical effect of four-wave mixing may then be used. Consequently, a clock may be reproduced from an ultra-high speed signal light of several ten GHz; this is impossible if electrical processing alone is used.
(2) A highly stable clock light is obtained, because the four-wave mixing effect obtained is stable.
(3) A clock light of a clock frequency which is one Nth (1/N) or N times the clock frequency of a signal light may be obtained, allowing the apparatus to operate as, for instance, an optical frequency divider, and an optical frequency multiplier.
(4) Both an optical clock and an electric clock are obtained, because the output signal of the VCO is also locked in phase to the signal light.
(5) In an apparatus for demultiplexing a time-division multiplexed signal, a non-linear optical medium is commonly used in apparatus for extracting an optical clock. Consequently, small size, stabilization, low power consumption, and low cost are simultaneously obtained.

## Claims

1. A method for synchronizing an optical clock to a signal, comprising the steps of:
a) generating a clock signal of a frequency dependent on a control voltage;
b) generating, in response to the clock signal, a clock light (102), represented by an intensity modulated light which is synchronous with the clock signal;
c) combining a pulse coded signal light (101) and the clock light (102);
d) applying the combined pulse coded signal light and the clock light to a non-linear optical medium (4) for generating a number of output lights (101,102,103) where at least one of the output lights is a four-wave mixing light (103), the time-mean power value of the four-wave mixing light being a measure of the phase difference between the clock light and the pulse coded signal light;
e) extracting from the output lights of the non-linear optical medium, four-wave mixing light (103) generated in the non-linear optical medium; and
f) generating the control voltage dependent on the extracted four-wave mixing light (103);
wherein the control voltage is used to generate the clock signal such that the clock signal and the clock light (102) are locked in phase to the pulse coded signal light (101) and have a clock frequency of one Nth or N times the clock frequency of the pulse coded signal light, where N is an integer.

2. A method for synchronizing an optical clock to a signal according to claim 1, in which step f) further comprises:
i) generating an oscillation signal;
ii) converting the extracted four-wave mixing light into a corresponding electric signal;
iii) deriving the phase difference between the pulse coded signal light and the clock light from the electric signal corresponding to the four-wave mixing light;
iv) generating the control voltage in dependence on the phase difference; and
v) modulating the phase of the clock signal by the oscillation signal.

3. A method for demultiplexing a time-division multiplexed signal, including the steps of providing an optical clock; and synchronising the optical clock using a synchronising method in accordance with claim 1,
wherein the pulse coded signal light (101) comprises N time division multiplexed signals at least one of which is to be demultiplexed; and the clock signal is generated to have a frequency of one Nth the clock frequency of the signal light (101) and equal to the clock frequency of the multiplexed signal to be demultiplexed; and
wherein step e) further comprises:
i) dividing the extracted four-wave mixing light into first and second four-wave mixing lights having a clock frequency of one Nth that of the signal light; and
ii) supplying the first four-wave mixing light as a demultiplexed output light; and
wherein in step f) it is the second four-wave mixing light that is used to generate the control voltage; the control voltage being used to generate the clock signal such that the clock signal and the clock light are locked in phase to the pulse coded signal light and have a frequency of one Nth times the clock frequency of the signal light, wherein N is an integer.

4. A method for demultiplexing a time-division multiplexed signal, including the steps of providing an optical clock; and synchronising the optical clock using a synchronising method in accordance with claim 1,
wherein the pulse coded signal light (101) comprises N time division multiplexed signals at least one of which is to be demultiplexed; the pulse coded signal light having a component parallel to the clock light (104b) and a component orthogonal (105b) to the clock light; and wherein the clock signal is generated to have a frequency of one Nth the clock frequency of the signal light (101) and equal to the clock frequency of the multiplexed signal to be demultiplexed; and
wherein in step d) of the synchronising method the components (104b, 105b) of the pulse coded signal light (101) are shifted in the non-linear optical medium by different amounts;
wherein in step f) of the synchronising method the control voltage is used to generate the clock signal such that the clock signal and the clock light are locked in phase to the pulse coded signal light and have a frequency of one Nth times the clock frequency of the signal light, wherein N is an integer;
the method also comprising the steps of:
g) extracting from the output lights of the non-linear optical medium, the signal light (101) comprising the phase shifted (104b, 105b) signal components;
h) receiving the extracted signal light (101) to produce a switched signal light (106) and a non-switched signal light (107), wherein the switched signal light (106) is supplied as an output, the switched signal light representing the one N time division multiplexed signal (106), and being obtained when the phase difference between the components (104b, 105b) of the signal light is n, and the non-switched signal light, representing the remaining N-1 time division multiplexed signals (107), and being obtained when the phase difference between the components of the signal light is zero.

5. A method for demultiplexing a time-division multiplexed signal, including the steps of providing an optical clock; and synchronising the optical clock using a synchronising method in accordance with claim 1,
wherein the pulse coded signal light (101) comprises N time division multiplexed signals at least one of which is to be demultiplexed; and the clock signal is generated to have a frequency of one Nth the clock frequency of the signal light (101) and equal to the clock frequency of the multiplexed signal to be demultiplexed;
wherein step c) includes dividing the combined pulse coded signal light and clock light into first and second combined pulse coded signal lights (104c, 105c) and clock lights (102);
and in step d) of the synchronising method it is the first combined pulse coded signal light (104c) and clock light that are applied to the non-linear optical medium (4) the phase of the first pulse coded signal light (104c) being shifted in the non-linear optical medium according to the peak intensity of the first clock light, and
wherein in step f) of the synchronising method the control voltage is used to generate the clock signal such that the clock signal and the clock light are locked in phase to the pulse coded signal light and have a frequency of one Nth times the clock frequency of the signal light, wherein N is an integer;
the method also comprising the steps of:
g) extracting from the output lights of the non-linear optical medium, the phase-shifted signal light (104c);
h) extracting from the second combined pulse coded signal light (105c) and clock light, the signal light which is a non-phase-shifted signal light (105c); and
i) receiving the extracted phase-shifted signal light (104c) and non-phase-shifted signal light (105c) to produce a switched signal light (106) and a non-switched signal light (107), wherein the switched signal light (106) is supplied as an output, the switched signal light representing the one N time division multiplexed signal (106), and being obtained when the phase difference between the phase-shifted signal light (101) and the non-phase-shifted signal light is n, and the non-switched signal light representing the remaining N-1 time division multiplexed signals (107) and being obtained when the phase difference between the phase-shifted signal light (101) and the non-phase-shifted signal light is zero.

6. An apparatus for synchronizing an optical clock to a signal, for use in the method of claim 1, comprising:
a voltage controlled osciilator (VCO) (10) for generating a clock signal of a frequency dependent on a control voltage;
a clock light generator (11), for receiving the clock signal from the VCO as an input and for generating, in response to the clock signal, a clock light (102), represented by an intensity modulated light, which is synchronous with the clock signal;
an optical coupler (1) for combining a pulse coded signal light (101) and the clock light (102) output from the clock light generator (11);
a non-linear optical medium (4) for receiving the combined pulse coded signal light and the clock light from the optical coupler and for generating a number of output lights (101, 102, 103) where at least one of the output lights is a four-wave mixing light (103), the time-mean power value of the four-wave mixing light being a measure of the phase difference between the clock light and the pulse coded signal light;
an optical filter (5) for extracting from the output lights of the non-linear optical medium four-wave mixing light (103) generated in the non-linear optical medium (4);
an optoelectronic converter (8) for receiving the extracted four-wave mixing light (103) and converting it into a corresponding electrical signal;
a control circuit (9) for receiving the electrical signal from the optoelectronic converter (8) and for applying the control voltage dependent on the electrical signal to the VCO (10) to generate the clock signal such that the clock signal and the clock light (102) are locked in phase to the pulse coded signal light (101) and have a clock frequency of one Nth or N times the clock frequency of the pulse coded signal light, where N is an integer.

7. An apparatus for synchronizing an optical clock to a signal according to claim 6, further comprising:
an oscillator (19) for generating an oscillation signal;
a phase comparator (20) for receiving the extracted four wave mixing light and the oscillation signal and for deriving the phase difference between the signal light and clock light; and
a phase modulator (21) for modulating the phase of the clock signal by the oscillation signal.

8. An apparatus for synchronizing an optical clock to a signal according to claim 6, in which the clock light generator (11) further comprises:
a semiconductor laser (13) for emitting light;
a LiNbO₃ optical modulator (14) for modulating the light to generate the clock light;
a drive circuit (15) for driving the LiNbO₃ optical modulator by receiving the clock signal; and
bias circuits (17,18) for biassing the LiNbO₃ optical modulator.

9. An apparatus for synchronizing an optical clock to a signal according to claim 8, in which the bias circuits for biassing the LiNbO₃ optical modulator, comprise first (17) and second bias circuits (18), wherein
first (17) and second bias circuits (18) are used to set the operation point of the LiNbO₃ optical modulator and to superpose an intensity modulation signal on the clock light (102).

10. An apparatus for demultiplexing a time-division multiplexed signal comprising: an apparatus for synchronizing an optical clock according to claim 6; and,
means for supplying a pulse coded signal light (101) comprising N time division multiplexed signals at least one of which is to be demultiplexed;
wherein the voltage controlled oscillator (VCO) (10) generates the clock signal such that it has a frequency of one Nth the clock frequency of the signal light and equal to the clock frequency of the multiplexed signal to be demultiplexed;
the apparatus also comprising an optical coupler (2) for receiving the extracted four-wave mixing light from the optical filter and for dividing it into first and second four-wave mixing lights having a clock frequency of one Nth that of the signal light, wherein the first four-wave mixing light is supplied as an output; and wherein the control circuit (9) applies a control voltage to the VCO (10) to generate the clock signal such that the clock signal and the clock light are locked in phase to the pulse coded signal light and have a frequency of one Nth times the clock frequency of the signal light, wherein N is an integer.

11. An apparatus for demultiplexing a time-division multiplexed signal, comprising an apparatus for synchronizing an optical clock-according to claim 6; and,
means for supplying a pulse coded signal light (101) comprising N time division multiplexed signals at least one of which is to be demultiplexed; the pulse coded signal light having a component (104b) parallel to the clock light and a component (105b) orthogonal to the clock light;
wherein the voltage controlled oscillator (VCO) (10) generates the clock signal such that it has a frequency of one Nth the clock frequency of the signal and equal to the clock frequency of the multiplexed signals to be demultiplexed; and
the control circuit (9) applies a control voltage to the VCO (10) to generate the clock signal such that the clock signal and the clock light are locked in phase to the pulse coded signal and have a frequency of one Nth times the clock frequency of the signal light, wherein N is an integer;
wherein in the non-linear optical medium the components (104b, 105b) of the pulse coded signal light (101) are shifted by different amounts;
the apparatus also comprising a second optical filter (6b) for receiving the output lights from the non-linear optical medium and for extracting from them only the signal light (101) comprising the phase shifted (104b, 105b) components;
a polarization beam splitter for receiving the extracted signal light (101), and for producing a switched signal light (106) and a non-switched signal light (107), wherein the switched signal light (106) is supplied as an output, the switched signal light representing the one N time division multiplexed signal (106), and being obtained when the phase difference between the components of the signal light is n, and the non-switched signal light representing the remaining N-1 time division multiplexed signals (107) and being obtained when the phase difference between the components of the signal light is zero.

12. An apparatus for demultiplexing a time-division multiplexed signal, comprising: an apparatus for synchronizing an optical clock in accordance with claim 6; and,
means for supplying a pulse coded signal light (101) comprising N time division multiplexed signals at least one of which is to be demultiplexed;
wherein the voltage controlled oscillator (VCO) (10) generates a clock signal such that it has a frequency of one Nth the clock frequency of the signal light and equal to the clock frequency of the multiplexed signal to be demultiplexed;
the control circuit (9) applying a control voltage to the VCO (10) to generate the clock signal such that the clock signal and the clock light are locked in phase to the pulse coded signal light and have a frequency of one Nth times the clock frequency of the signal light, wherein N is an integer; and
the optical coupler is also for dividing the pulse coded signal light (104) and the clock light into first and second combined pulse coded signal lights (104c, 105c) and clock lights;
wherein in the non-linear optical medium the phase of the first pulse coded signal light (104c) is shifted according to the peak intensity of the first clock light,
the apparatus further comprising a second optical filter (6d) for receiving the output lights from the non-linear optical medium and for extracting from them only the phase-shifted signal light (101);
a third optical filter (6c) for receiving the second combined pulse coded signal light and clock light from the optical coupler (1) and for extracting only the second signal light (105c) which is a non-phase-shifted signal light (105c);
a second optical coupler (3) for receiving the extracted phase-shifted signal light (104c) and non-phase-shifted signal light (105c) to produce a switched signal light (106) and a non-switched signal light (107), wherein the switched signal light (106) is supplied as an output, the switched signal light representing the one N time division multiplexed signal (106), and being obtained when the phase difference between the phase-shifted signal light (101) and the non-phase-shifted signal light is n, and the non-switched signal light representing the remaining N-1 time division multiplexed signals (107) and being obtained when the phase difference between the phase-shifted signal light (101) and the non-phase-shifted signal light is zero.

13. A method for demultiplexing a time-division multiplexed signal, comprising the steps of:
a) supplying a pulse coded signal light (101) comprising N time division multiplexed signals;
b) dividing the pulse coded signal light (101) into first (104) and second (105) pulse coded signal lights;
c) generating a clock signal of a frequency of one Nth the clock frequency of the signal light (101) and equal to the clock frequency of the multiplexed signal to be demultiplexed;
d) generating, in response to the clock signal, a clock light (102), represented by an intensity modulated light which is synchronous with the clock signal and which corresponds in timing with one of the N time division multiplexed signals;
e) combining the first pulse coded signal light (104) comprising the N time division multiplexed signals and the clock light (102) corresponding in timing to one of said N time division multiplexed signals;
f) supplying the combined first pulse coded signal light and the clock light to a non linear optical medium (4) such that at least one four-wave mixing light (103) is generated in the non-linear optical medium (4) and the phase of the first pulse coded signal light (104) is shifted according to the peak intensity of the clock light, the time-mean power value of the four-wave mixing light being a measure of the phase difference between the clock light and the pulse coded signal light;
g) receiving from the non-linear optical medium (4) the clock light (102), four-wave mixing light (103) generated in the non-linear optical medium, and the first pulse coded signal light (104) phase shifted according to the peak intensity of the clock light (102);
h) causing the first pulse coded signal light (104) phase shifted according to the peak intensity of the clock light, to interfere with the second pulse coded signal light (105) such that a switched signal light (106) and a non-switched signal light (107) are obtained, the switched signal light representing the one N time division multiplexed signal (106), and being obtained from first (104) and second (105) signal lights having a phase difference of n, and the non-switched signal light representing the remaining N-1 time division multiplexed signals (107) and being obtained from first (104) and second (105) signal lights having zero phase difference;
i) supplying the non-switched signal light (107), clock light (102) and the four-wave mixing light (103) as an output to be demultiplexed;
j) separating the switched signal light (106) from the clock light (102) and the four-wave mixing light (103);
k) supplying the switched signal light (106) so separated as an output representing a demultiplexed signal light;
l) separating the four-wave mixing light (103) from the switched signal light (106) and the clock light (102); and
m) generating a control voltage in dependence on the four-wave mixing light so separated (103);
wherein the control voltage is used to generate the clock signal such that the clock signal and the clock light are locked in phase to the pulse coded signal and have a frequency of one Nth times the clock frequency of the signal light, wherein N is an integer.

14. The method according to claim 13, in which the first pulse coded signal light and the second pulse coded signal light are input in step h) into an optical coupler whereby they interfere to produce switched (106) and non-switched signal lights (107).

15. The method according to claim 13, in which the first pulse coded signal light and the second pulse coded signal light are input in step h) into a polarization beam splitter whereby they interfere to produce switched (106) and non-switched signal lights (107).

16. An apparatus for demultiplexing a time-division multiplexed signal, comprising:
means for supplying a pulse coded signal light (101) comprising N time division multiplexed signals;
an optical coupler (2) for dividing the pulse coded signal light into first (104) and second (105) pulse coded signal lights;
a voltage controlled oscillator (VCO) (10) for generating a clock signal of a frequency of one Nth the clock frequency of the signal light and equal to the clock frequency of the multiplexed signal to be demultiplexed;
a clock light generator (11), for receiving the clock signal from the VCO as an input and for generating, in response to the clock signal, an intensity-modulated clock light (102), which is synchronous with the clock signal;
an optical coupler (1) for combining first pulse coded signal light (104) and the clock light (102) output from the clock light generator (11);
a non-linear optical medium (4) for:
a) receiving the combined first pulse coded signal light (104) and the clock light (102) from the optical coupler and for generating a number of output lights (104, 102, 103) in which at least one of the output lights is a four-wave mixing light (103) and in which the phase of the first pulse coded signal light (104) is shifted according to the peak intensity of the clock light, the time-mean power value of the four-wave mixing light being a measure of the phase difference between the clock light and the pulse coded signal light; and
b) receiving the second pulse coded signal light (105);
means for causing the first (104) and second pulse coded signal lights (105) to interfere, thereby producing a switched signal light (106) and a non-switched signal light (107);
wherein the phase-shifted first pulse coded signal light (104), clock light (102) and the four-wave mixing light (103), and second pulse coded signal light (105) are supplied to the means for causing the first (104) and second pulse coded signal light to interfere to produce a switched signal light (106) and a non switched signal light (107), the switched signal light representing the one N time division multiplexed signal (106), and being obtained from first (104) and second (105) signal lights having a phase difference of n, and the non-switched signal light representing the remaining N-1 time division multiplexed signals (107) and being obtained from first (104) and second (105) signal lights having zero phase difference;
an optical coupler (3) for receiving the switched signal light (106), the clock light (102) and the four-wave mixing light (103) and dividing them into first and second output lights;
an optical filter (6) for receiving the first output light from the optical coupler (3) and for extracting from the first output light only the switched signal light (106) to be supplied as a demultiplexed signal output;
an optical filter (5) for receiving the second output light from optical coupler (3) and for extracting from the second output light only the four-wave signal light (103);
an optoelectronic converter (8) for receiving the extracted four-wave mixing light (103) from the optical filter (5) and for converting it into a corresponding electrical signal;
a control circuit (9) for receiving the electrical signal from the optoelectronic converter (8) and for applying a control voltage dependent on the electrical signal to the VCO (10) to generate the clock signal such that the clock signal and the clock light are locked in phase to the pulse coded signal and have a frequency of one Nth times the clock frequency of the signal light, wherein N is an integer.

17. The apparatus of claim 16 in which the means for causing the first pulse coded signal light and the second pulse coded signal light to interfere is an optical coupler.

18. The apparatus of claim 17 in which the optical coupler used for causing the first and second pulse coded signal lights to interfere is the same optical coupler (2) used for dividing the pulse coded signal light into first (104) and second (105) pulse coded signal lights.

19. The apparatus of claim 16 in which the means for causing the first pulse coded signal light and the second pulse coded signal light to interfere is a polarization beam splitter.

20. The apparatus of claim 16 in which the first (104) and second (105) pulse coded signal lights travel in opposite directions through the non-linear optical medium.

## Patentansprüche

1. Verfahren zum Synchronisieren eines optischen Takts mit einem Signal, umfassend die folgenden Schritte:
a) Erzeugen eines Taktsignals mit einer Frequenz, die von einer Steuerspannung abhängig ist;
b) Erzeugen, als Reaktion auf das Taktsignal, eines Taktlichts (102), das durch ein intensitätsmoduliertes Licht repräsentiert wird, das mit dem Taktsignal synchron ist;
c) Kombinieren eines pulscodierten Signallichts (101) und des Taktlichts (102);
d) Zuführen des kombinierten pulscodierten Signallichts und des Taktlichts zu einem nichtlinearen optischen Medium (4) zum Erzeugen einer Reihe von Ausgangslichtern (101, 102, 103), wobei wenigstens eines der Ausgangslichter ein Vierwellenmischlicht (103) ist, wobei der Zeitmittel-Leistungswert des Vierwellenmischlichts ein Maß für die Phasendifferenz zwischen dem Taktlicht und dem pulscodierten Signallicht ist;
e) Extrahieren des in dem nichtlinearen optischen Medium erzeugten Vierwellenmischlichts (103) von den Ausgangslichtem des nichtlinearen optischen Mediums; und
f) Erzeugen der Steuerspannung in Abhängigkeit von dem extrahierten Vierwellenmischlicht (103);
wobei die Steuerspannung zum Erzeugen des Taktsignals verwendet wird, so dass das Taktsignal und das Taktlicht (102) auf das pulscodierte Signallicht (101) phasenverriegelt werden und eine Taktfrequenz von einem N-tel oder dem N-fachen der Taktfrequenz des pulscodierten Signallichts haben, wobei N eine ganze Zahl ist.

2. Verfahren zum Synchronisieren eines optischen Taktes auf ein Signal nach Anspruch 1, bei dem Schritt f) ferner Folgendes umfasst:
i) Erzeugen eines Oszillationssignals;
ii) Konvertieren des extrahierten Vierwellenmischlichts in ein entsprechendes elektrisches Signal;
iii) Ableiten der Phasendifferenz zwischen dem pulscodierten Signallicht und dem Taktlicht von dem dem Vierwellenmischlicht entsprechenden elektrischen Signal;
iv) Erzeugen der Steuerspannung in Abhängigkeit von der Phasendifferenz; und
v) Modulieren der Phase des Taktsignals durch das Oszillationssignal.

3. Verfahren zum Demultiplexieren eines zeitmultiplexierten Signals, das die Schritte des Bereitstellens eines optischen Taktes und des Synchronisierens des optischen Taktes mit einem Synchronisationsverfahren nach Anspruch 1 umfasst,
wobei das pulscodierte Signallicht (101) N zeitmultiplexierte Signale umfasst, von denen wenigstens eines demultiplexiert werden soll; und das Taktsignal so erzeugt wird, dass es eine Frequenz von einem N-tel der Taktfrequenz des Signallichts (101) und gleich der Taktfrequenz des zu demultiplexierenden multiplexierten Signals hat; und
wobei Schritt e) ferner Folgendes umfasst:
i) Unterteilen des extrahierten Vierwellenmischlichts in ein erstes und ein zweites Vierwellenmischlicht mit einer Taktfrequenz von einem N-tel von der des Signallichts; und
ii) Zuführen des ersten Vierwellenmischlichts als demultiplexiertes Ausgangslicht; und
wobei in Schritt f) das zweite Vierwellenmischlicht zum Erzeugen der Steuerspannung verwendet wird; wobei die Steuerspannung zum Erzeugen des Taktsignals verwendet wird, so dass das Taktsignal und das Taktlicht auf das pulscodierte Signallicht phasenverriegelt werden und eine Frequenz von einem N-tel der Taktfrequenz des Signallichts hat, wobei N eine ganze Zahl ist.

4. Verfahren zum Demultiplexieren eines zeitmultiplexierten Signals, umfassend die Schritte des Bereitstellens eines optischen Taktes und des Synchronisierens des optischen Taktes mit einem Synchronisationsverfahren nach Anspruch 1,
wobei das pulscodierte Signallicht (101) N zeitmultiplexierte Signale umfasst, von denen wenigstens eines demultiplexiert werden soll; wobei das pulscodierte Signallicht eine Komponente parallel zu dem Taktlicht (104b) und eine Komponente orthogonal (105b) zu dem Taktlicht hat; und wobei das Taktsignal so erzeugt wird, dass es eine Frequenz von einem N-tel der Taktfrequenz des Signallichts (101) und gleich der Taktfrequenz des zu demultiplexierenden multiplexierten Signals hat; und
wobei in Schritt d) des Synchronisierungsverfahrens die Komponenten (104b, 105b) des pulscodierten Signallichts (101) in dem nichtlinearen optischen Medium um unterschiedliche Beträge verschoben werden;
wobei in Schritt f) des Synchronisationsverfahrens die Steuerspannung zum Erzeugen des Taktsignals verwendet wird, so dass das Taktsignal und das Taktlicht auf das pulscodierte Signallicht phasenverriegelt werden und eine Frequenz von einem N-tel der Taktfrequenz des Signallichts haben, wobei N eine ganze Zahl ist;
wobei das Verfahren auch die folgenden Schritte umfasst:
g) Extrahieren des die phasenverschobenen (104b, 105b) Signalkomponenten umfassenden Signallichts (101) von den Ausgangslichtern des nichtlinearen optischen Mediums;
h) Empfangen des extrahierten Signallichts (101) zum Erzeugen eines geschalteten Signallichts (106) und eines nichtgeschalteten Signallichts (107), wobei das geschaltete Signallicht (106) als Ausgang zugeführt wird, wobei das geschaltete Signallicht das eine N zeitmultiplexierte Signal (106) repräsentiert und erhalten wird, wenn die Phasendifferenz zwischen den Komponenten (104b, 105b) des Signallichts n ist, und wobei das nichtgeschaltete Signallicht die übrigen N-1 zeitmultiplexierten Signale (107) repräsentiert und dann erhalten wird, wenn die Phasendifferenz zwischen den Komponenten des Signallichts null ist.

5. Verfahren zum Demultiplexieren eines zeitmultiplexierten Signals, das die Schritte des Bereitstellens eines optischen Taktes und des Synchronisierens des optischen Taktes mit einem Synchronisationsverfahren nach Anspruch 1 umfasst,
wobei das pulscodierte Signallicht (101) N zeitmultiplexierte Signale umfasst, von denen wenigstens eines demultiplexiert werden soll; und das Taktsignal so erzeugt wird, dass es eine Frequenz von einem N-tel der Taktfrequenz des Signallichts (101) und gleich der Taktfrequenz des zu demultiplexierenden multiplexierten Signals hat;
wobei Schritt c) das Unterteilen des kombinierten pulscodierten Signalichts und des Taktlichts in erste und zweite kombinierte pulscodierte Signalichter (104c, 105c) und Taktlichter (102) beinhaltet;
und in Schritt d) des Synchronisationsverfahrens das erste kombinierte pulscodierte Signallicht (104c) und das Taktlicht dem nichtlinearen optischen Medium (104) zugeführt werden, wobei die Phase des ersten pulscodierten Signallichts (104c) in dem nichtlinearen optischen Medium gemäß der Peakintensität des ersten Taktlichtes verschoben wird, und
wobei in Schritt f) des Synchronisationsverfahrens die Steuerspannung zum Erzeugen des Taktsignals verwendet wird, so dass das Taktsignal und das Taktlicht auf das pulscodierte Signallicht phasenverriegelt werden und eine Frequenz von einem N-tel der Taktfrequenz des Signallichts haben, wobei N eine ganze Zahl ist;
wobei das Verfahren ferner die folgenden Schritte umfasst:
g) Extrahieren des phasenverschobenen Signallichts (104c) von den Ausgangslichtern des nichtlinearen optischen Mediums;
h) Extrahieren des Signallichts, das ein nicht phasenverschobenes Signallicht (105c) ist, von dem zweiten kombinierten pulscodierten Signallicht (105c) und dem Taktlicht; und
i) Empfangen des extrahierten phasenverschobenen Signallichts (104c) und des nicht phasenverschobenen Signallichts (105c) zum Erzeugen eines geschalteten Signallichts (106) und eines nichtgeschalteten Signallichts (107), wobei das geschaltete Signallicht (106) als Ausgang zugeführt wird, und wobei das geschaltete Signallicht das eine N zeitmultiplexierte Signal (106) repräsentiert und erhalten wird, wenn die Phasendifferenz zwischen dem phasenverschobenen Signallicht (101) und dem nicht phasenverschobenen Signallicht π ist, und wobei das nichtgeschaltete Signallicht die übrigen N-1 zeitmultiplexierten Signale (107) repräsentiert und erhalten wird, wenn die Phasendifferenz zwischen dem phasenverschobenen Signallicht (101) und dem nicht phasenverschobenen Signallicht null ist.

6. Vorrichtung zum Synchronisieren eines optischen Takts mit einem Signal für die Verwendung in dem Verfahren nach Anspruch 1, wobei die Vorrichtung Folgendes umfasst:
einen spannungsgesteuerten Oszillator (VCO) (10) zum Erzeugen eines Taktsignals mit einer von einer Steuerspannung abhängigen Frequenz;
einen Taktlichtgenerator (11) zum Empfangen des Taktsignals von dem VCO als Eingang und zum Erzeugen, als Reaktion auf das Taktsignal, eines Taktlichts (102), das von einem intensitätsmodulierten Licht repräsentiert wird, das mit dem Taktsignal synchron ist;
einen Optokoppler (1) zum Kombinieren eines pulscodierten Signallichts (101) und des von dem Taktlichtgenerator (11) ausgegebenen Taktlichts (102);
ein nichtlineares optisches Medium (4) zum Empfangen des kombinierten pulscodierten Signallichts und des Taktlichts von dem Optokoppler und zum Erzeugen einer Reihe von Ausgangslichtern (101, 102, 103), wobei wenigstens eines der Ausgangslichter ein Vierwellenmischlicht (103) ist, wobei der Zeitmittel-Leistungswert des Vierwellenmischlichts ein Maß für die Phasendifferenz zwischen dem Taktlicht und dem pulscodierten Signallicht ist;
einen optischen Filter (5) zum Extrahieren des in dem nichtlinearen optischen Medium (4) erzeugten Vierwellenmischlichts von den Ausgangslichtern des nichtlinearen optischen Mediums;
einen optoelektronischen Wandler (8) zum Empfangen des extrahierten Vierwellenmischlichts (103) und zum Umwandlen desselben in ein entsprechendes elektrisches Signal;
eine Steuerschaltung (9) zum Empfangen des elektrischen Signals von dem optoelektronischen Wandler (8) und zum Anlegen der von dem elektrischen Signal abhängigen Steuerspannung an den VCO (10), um das Taktsignal zu erzeugen, so dass das Taktsignal und das Taktlicht (102) auf das pulscodierte Signallicht (101) phasenverriegelt werden und eine Taktfrequenz von einem N-tel oder dem N-fachen der Taktfrequenz des pulscodierten Signals hat, wobei N eine ganze Zahl ist.

7. Vorrichtung zum Synchronisieren eines optischen Takts mit einem Signal nach Anspruch 6, die ferner Folgendes umfasst:
einen Oszillator (19) zum Erzeugen eines Oszillationssignals;
einen Phasenkomparator (20) zum Empfangen des extrahierten Vierwellenmischlichts und des Oszillationssignals und zum Ableiten der Phasendifferenz zwischen dem Signallicht und dem Taktlicht; und
einen Phasenmodulator (21) zum Modulieren der Phase des Taktsignals durch das Oszillationssignal.

8. Vorrichtung zum Synchronisieren eines optischen Takts mit einem Signal nach Anspruch 6, wobei der Taktlichtgenerator (11) ferner Folgendes umfasst:
einen Halbleiterlaser (13) zum Aussenden von Licht;
einen optischen LiNbO₃-Modulator (14) zum Modulieren des Lichts zum Erzeugen des Taktlichts;
eine Ansteuerungsschaltung (15) zum Ansteuern des optischen LiNbO₃-Modulators durch Empfangen des Taktsignals; und
Vorspannungsschaltungen (17, 18) zum Vorspannen des optischen LiNbO₃-Modulators.

9. Vorrichtung zum Synchronisieren eines optischen Takts auf ein Signal nach Anspruch 8, wobei die Vorspannungsschaltungen zum Vorspannen des optischen LiNbO₃-Modulators eine erste (17) und eine zweite (18) Vorspannungsschaltung umfassen, wobei
die erste (17) und die zweite (18) Vorspannungsschaltung zum Einstellen des Ansprechpunkts des optischen LiNbO₃-Modulators und zum Überlagern eines Intensitätsmodulationssignals auf das Taktlicht (102) verwendet werden.

10. Vorrichtung zum Demultiplexieren eines zeitmultiplexierten Signals, die Folgendes umfasst: eine Vorrichtung zum Synchronisieren eines optischen Takts nach Anspruch 6; und
Mittel zum Zuführen eines pulscodierten Signallichts (101), umfassend N zeitmultiplexierte Signale, von denen wenigstens eines demultiplexiert werden soll;
wobei der spannungsgesteuerte Oszillator (VCO) (10) das Taktsignal erzeugt, so dass es eine Frequenz von einem N-tel der Taktfrequenz des Signallichts und gleich der Taktfrequenz des zu demultiplexierenden multiplexierten Signals hat;
wobei die Vorrichtung auch einen Optokoppler (2) zum Empfangen des extrahierten Vierwellenmischlichts von dem optischen Filter und zum Unterteilen desselben in ein erstes und ein zweites Vierwellenmischlicht mit einer Taktfrequenz von einem N-tel von der des Signallichts umfasst, wobei das erste Vierwellenmischlicht als Ausgang zugeführt wird; und wobei die Steuerschaltung (9) eine Steuerspannung an den VCO (10) anlegt, um das Taktsignal zu erzeugen, so dass das Taktsignal und das Taktlicht auf das pulscodierte Signallicht phasenverriegelt werden und eine Frequenz von einem N-fachen der Taktfrequenz des Signallichts haben, wobei N eine ganze Zahl ist.

11. Vorrichtung zum Demultiplexieren eines zeitmultiplexierten Signals, umfassend eine Vorrichtung zum Synchronisieren eines optischen Takts nach Anspruch 6; und
Mittel zum Zuführen eines pulscodierten Signallichts (101), umfassend N zeitmultiplexierte Signale, von denen wenigstens eines demultiplexiert werden soll;
wobei das pulscodierte Signallicht eine Komponente (104b) parallel zum Taktlicht und eine Komponente (105b) orthogonal zum Taktlicht hat;
wobei der spannungsgesteuerte Oszillator (VCO) (10) das Taktsignal so erzeugt, dass es eine Frequenz von einem N-tel der Taktfrequenz des Signals und gleich der Taktfrequenz der zu demultiplexierenden multiplexierten Signale hat; und
die Steuerschaltung (9) eine Steuerspannung an den VCO (10) anlegt, um das Taktsignal so zu erzeugen, dass das Taktsignal und das Taktlicht auf das pulscodierte Signal phasenverriegelt werden und eine Frequenz von einem N-fachen der Taktfrequenz des Signallichts haben, wobei N eine ganze Zahl ist;
wobei die Komponenten (104b, 105b) des pulscodierten Signallichts (101) in dem nichtlinearen optischen Medium um verschiedene Beträge verschoben sind;
wobei die Vorrichtung auch einen zweiten optischen Filter (6b) zum Empfangen der Ausgangslichter von dem nichtlinearen optischen Medium und zum Extrahieren nur des Signallichts (101) davon umfasst, das die phasenverschobenen (104b, 105b) Komponenten umfasst;
einen Polarisationsstrahlenspalter zum Empfangen des extrahierten Signallichts (101) und zum Erzeugen eines geschalteten Signallichts (106) und eines nichtgeschalteten Signallichts (107), wobei das geschaltete Signallicht (106) als Ausgang zugeführt wird, wobei das geschaltete Signallicht das eine N zeitmultiplexierte Signal (106) repräsentiert und dann erhalten wird, wenn die Phasendifferenz zwischen den Komponenten des Signallichts π ist, und wobei das nichtgeschaltete Signallicht die übrigen N-1 zeitmultiplexierten Signale (107) repräsentiert und dann erhalten wird, wenn die Phasendifferenz zwischen den Komponenten des Signallichts null ist.

12. Vorrichtung zum Demultiplexieren eines zeitmultiplexierten Signals, die Folgendes umfasst: eine Vorrichtung zum Synchronisieren eines optischen Takts gemäß Anspruch 6; und
Mittel zum Zuführen eines pulscodierten Signallichts (101), umfassend N zeitmultiplexierte Signale, von denen wenigstens eines demultiplexiert werden soll;
wobei der spannungsgesteuerte Oszillator (VCO) (10) ein solches Taktsignal erzeugt, das eine Frequenz von einem N-tel der Taktfrequenz des Signallichts und gleich der Taktfrequenz des zu demultiplexierenden multiplexierten Signals hat;
wobei die Steuerschaltung (9) eine Steuerspannung an den VCO (10) anlegt, um das Taktsignal so zu erzeugen, dass das Taktsignal und das Taktlicht auf das pulscodierte Signallicht phasenverriegelt werden und eine Frequenz von einem N-tel der Taktfrequenz des Signallichts hat, wobei N eine ganze Zahl ist; und
der Optokoppler auch zum Unterteilen des pulscodierten Signallichts (104) und des Taktlichts in ein erstes und ein zweites kombiniertes pulscodiertes Signallicht (104c, 105c) und Taktlichter dient;
wobei die Phase des ersten pulscodierten Signallichts (104c) in dem nichtlinearen optischen Medium gemäß der Peakintensität des ersten Taktlichts verschoben ist,
wobei die Vorrichtung ferner einen zweiten optischen Filter (6d) zum Empfangen der Ausgangslichter von dem nichtlinearen optischen Medium und zum Extrahieren nur des phasenverschobenen Signallichts (101) davon umfasst;
einen dritten optischen Filter (6c) zum Empfangen des zweiten kombinierten pulscodierten Signallichts und Taktlichts von dem Optokoppler (1) und zum Extrahieren nur des zweiten Signallichts (105c) davon, das ein nicht phasenverschobenes Signallicht (105c) ist;
einen zweiten Optokoppler (3) zum Empfangen des extrahierten phasenverschobenen Signallichts (104c) und des nicht phasenverschobenen Signallichts (105c), um ein geschaltetes Signallicht (106) und ein nichtgeschaltetes Signallicht (107) zu erzeugen, wobei das geschaltete Signallicht (106) als Ausgang zugeführt wird, wobei das geschaltete Signallicht das eine N zeitmultiplexierte Signal (106) repräsentiert und dann erhalten wird, wenn die Phasendifferenz zwischen dem phasenverschobenen Signallicht (101) und dem nicht phasenverschobenen Signallicht π ist, und wobei das nichtgeschaltete Signallicht die übrigen N-1 zeitmultiplexierten Signale (107) repräsentiert und dann erhalten wird, wenn die Phasendifferenz zwischen dem phasenverschobenen Signallicht (101) und dem nicht phasenverschobenen Signallicht null ist.

13. Verfahren zum Demultiplexieren eines zeitmultiplexierten Signals, umfassend die folgenden Schritte:
a) Zuführen eines pulscodierten Signallichts (101), das N zeitmultiplexierte Signale umfasst;
b) Unterteilen des pulscodierten Signallichts (101) in erste (104) und zweite (105) pulscodierte Signallichter;
c) Erzeugen eines Taktsignals mit einer Frequenz von einem N-tel der Taktfrequenz des Signallichts (101) und gleich der Taktfrequenz des zu demultiplexierenden multiplexierten Signals;
d) Erzeugen, als Reaktion auf das Taktsignal, eines Taktlichts (102), das durch ein intensitätsmoduliertes Licht repräsentiert wird, das mit dem Taktsignal synchron ist und das zeitlich einem der N zeitmultiplexierten Signale entspricht;
e) Kombinieren des ersten pulscodierten Signallichts (104), umfassend die N zeitmultiplexierten Signale und das Taktlicht (102), das zeitlich einem der genannten N zeitmultiplexierten Signale entspricht;
f) Zuführen des kombinierten ersten pulscodierten Signallichts und des Taktlichts zu einem nichtlinearen optischen Medium (4), so dass wenigstens ein Vierwellenmischlicht (103) in dem nichtlinearen optischen Medium (4) erzeugt wird und die Phase des ersten pulscodierten Signallichts (104) gemäß der Peakintensität des Taktlichts verschoben wird, wobei der Zeitmittel-Leistungswert des Vierwellenmischlichts ein Maß für die Phasendifferenz zwischen dem Taktlicht und dem pulscodierten Signallicht ist;
g) Empfangen des in dem nichtlinearen optischen Medium erzeugten Vierwellenmischlichts (103) und des ersten pulscodierten Lichtes (104), das gemäß der Peakintensität des Taktlichts (102) phasenverschoben ist, von dem nichtlinearen optischen Medium (4) des Taktlichts (102);
h) Bewirken, dass sich das erste, gemäß der Peakintensität des Taktlichts phasenverschobene pulscodierte Signallicht (104) mit dem zweiten pulscodierten Signallicht (105) überlagert, so dass ein geschaltetes Signallicht (106) und ein nichtgeschaltetes Signallicht (107) erhalten werden, wobei das geschaltete Signallicht das eine N zeitmultiplexierte Signal (106) repräsentiert und von dem ersten (104) und dem zweiten (105) Signallicht mit einer Phasendifferenz von π erhalten wird, und wobei das nichtgeschaltete Signallicht die übrigen N-1 zeitmultiplexierten Signale (107) repräsentieren und von dem ersten (104) und dem zweiten (105) Signallicht mit einer Phasendifferenz von null erhalten werden;
i) Zuführen des nichtgeschalteten Signallichts (107), des Taktlichts (101) und des Vierwellenmischlichts (103) als zu demultiplexierender Ausgang;
j) Trennen des geschalteten Signallichts (106) von dem Taktlicht (102) und dem Vierwellenmischlicht (103);
k) Zuführen des so getrennten geschalteten Signallichts (106) als Ausgang, der ein demultiplexiertes Signallicht repräsentiert;
l) Trennen des Vierwellenmischlichts (103) von dem geschalteten Signallicht (106) und dem Taktlicht (102); und
m) Erzeugen einer Steuerspannung in Abhängigkeit von dem so getrennten Vierwellenmischlicht (103);
wobei die Steuerspannung zum Erzeugen des Taktsignals verwendet wird, so dass das Taktsignal und das Taktlicht auf das pulscodierte Signal phasenverriegelt sind und eine Frequenz von einem N-tel der Taktfrequenz des Signallichts haben, wobei N eine ganze Zahl ist.

14. Verfahren nach Anspruch 13, bei dem das erste pulscodierte Signallicht und das zweite pulscodierte Signallicht in Schritt h) in einen Optokoppler eingegeben werden, so dass sie einander überlagern, um geschaltete (106) und nichtgeschaltete (107) Signallichter zu erzeugen.

15. Verfahren nach Anspruch 13, bei dem das erste pulscodierte Signallicht und das zweite pulscodierte Signallicht in Schritt h) in einen Polarisationsstrahlspalter eingegeben werden, so dass sie einander überlagern, um geschaltete (106) und nichtgeschaltete (107) Signallichter zu erzeugen.

16. Vorrichtung zum Demultiplexieren eines zeitmultiplexierten Signals, die Folgendes umfasst:
Mittel zum Zuführen eines pulscodierten Signallichts (101), umfassend N zeitmultiplexierte Signale;
einen Optokoppler (2) zum Unterteilen des pulscodierten Signallichts in erste (104) und zweite (105) pulscodierte Signallichter;
einen spannungsgesteuerten Oszillator (VCO) (10) zum Erzeugen eines Taktsignals mit einer Frequenz von einem N-tel der Taktfrequenz des Signallichts und gleich der Taktfrequenz des zu demultiplexierenden multiplexierten Signals;
einen Taktlichtgenerator (11) zum Empfangen des Taktsignals von dem VCO als Eingang und zum Erzeugen, als Reaktion auf das Taktsignal, eines intensitätsmodulierten Taktlichts (102), das mit dem Taktsignal synchron ist;
einen Optokoppler (1) zum Kombinieren des ersten pulscodierten Signallichts (104) und des Taktlichts (102), das von dem Taktlichtgenerator (11) ausgegeben wird;
ein nichtlineares optisches Medium (4) zum:
a) Empfangen des kombinierten ersten pulscodierten Signallichts (104) und Taktlichts (102) von dem Optokoppler und zum Erzeugen einer Reihe von Ausgangslichtem (104, 102, 103), wobei wenigstens eines der Ausgangslichter ein Vierwellenmischlicht (103) ist und wobei die Phase des ersten pulscodierten Signallichts (104) gemäß der Peakintensität des Taktlichts verschoben ist, wobei der Zeitmittel-Leistungswert des Vierwellenmischlichts ein Maß für die Phasendifferenz zwischen dem Taktlicht und dem pulscodierten Signallicht ist; und
b) Empfangen des zweiten pulscodierten Signallichts (105);
Mittel, um zu bewirken, dass das erste (104) und das zweite (105) pulscodierte Signallicht eineinander überlagern, um dadurch ein geschaltetes Signallicht (106) und ein nichtgeschaltetes Signallicht (107) zu erzeugen;
wobei das phasenverschobene erste pulscodierte Signallicht (104), das Taktlicht (102) und das Vierwellenmischlicht (103) sowie das zweite pulscodierte Signallicht (105) dem Mittel zugeführt werden, um zu bewirken, dass das erste (104) und das zweite pulscodierte Signallicht einander überlagern, um ein geschaltetes Signallicht (106) und ein nichtgeschaltetes Signallicht (107) zu erzeugen, wobei das geschaltete Signallicht das eine N zeitmultiplexierte Signal (106) repräsentiert und von dem ersten (104) und dem zweiten (105) Signallicht mit einer Phasendifferenz von π erhalten wird, und wobei das nichtgeschaltete Signallicht die übrigen N-1 zeitmultiplexierten Signale (107) repräsentiert und von dem ersten (104) und dem zweiten (105) Signallicht mit einer Phasendifferenz von null erhalten wird;
einen Optokoppler (3) zum Empfangen des geschalteten Signallichts (106), des Taktlichts (102) und des Vierwellenmischlichts (103) und zum Unterteilen derselben in ein erstes und ein zweites Ausgangslicht;
einen optischen Filter (6) zum Empfangen des ersten Ausgangslichts von dem Optokoppler (3) und zum Extrahieren nur des zuzuführenden geschalteten Signallichts (106) als demultiplexierten Signalausgangs von dem ersten Ausgangslicht;
einen optischen Filter (5) zum Empfangen des zweiten Ausgangslichts von dem Optokoppler (3) und zum Extrahieren nur des Vierwellensignallichts (103) von dem zweiten Ausgangslicht;
einen optoelektronischen Wandler (8) zum Empfangen des extrahierten Vierwellenmischlichts (103) von dem optischen Filter (5) und zum Umwandeln desselben in ein entsprechendes elektrisches Signal;
eine Steuerschaltung (9) zum Empfangen des elektrischen Signals von dem optoelektronischen Wandler (8) und zum Anlegen einer Steuerspannung in Abhängigkeit von dem elektrischen Signal an den VCO (10) zum Erzeugen des Taktsignals, so dass das Taktsignal und das Taktlicht auf das pulscodierte Signal phasenverriegelt sind und eine Frequenz von einem N-tel der Taktfrequenz des Signallichts haben, wobei N eine ganze Zahl ist.

17. Vorrichtung nach Anspruch 16, wobei das Mittel, um zu bewirken, dass das erste pulscodierte Signallicht und das zweite pulscodierte Signallicht einander überlagern, ein Optokoppler ist.

18. Vorrichtung nach Anspruch 17, wobei der Optokoppler, der verwendet wird, um zu bewirken, dass das erste und das zweite pulscodierte Signallicht einander überlagern, derselbe Optokoppler (2) ist, der zum Unterteilen des pulscodierten Signallichts in erste (104) und zweite (105) pulscodierte Signallichter verwendet wird.

19. Vorrichtung nach Anspruch 16, wobei das Mittel, um zu bewirken, dass das erste pulscodierte Signallicht und das zweite pulscodierte Signallicht einander überlagern, ein Polarisationsstrahlenspalter ist.

20. Vorrichtung nach Anspruch 16, wobei das erste (104) und das zweite (105) pulscodierte Signallicht in entgegengesetzten Richtungen durch das nichtlineare optische Medium wandern.

## Revendications

1. Procédé de synchronisation d'une horloge optique sur un signal, comprenant les étapes suivantes :
a) génération d'un signal d'horloge d'une fréquence dépendante d'une tension de commande ;
b) génération, en réponse au signal d'horloge, d'une lumière d'horloge (102), représentée par une lumière modulée en intensité qui est synchronisée avec le signal d'horloge ;
c) combinaison d'une lumière de signal à impulsions codées (101) et de la lumière d'horloge (102) ;
d) application de la lumière de signal à impulsions codées et de la lumière d'horloge combinées à un milieu optique non linéaire (4) pour générer un nombre de lumières de sortie (101, 102, 103) où au moins l'une des lumières de sortie est une lumière de mélange à quatre ondes (103), la valeur de puissance moyenne dans le temps de la lumière de mélange à quatre ondes étant une mesure de la différence de phase entre la lumière d'horloge et la lumière de signal à impulsions codées ;
e) extraction, à partir des lumières de sortie du milieu optique non linéaire, de la lumière de mélange à quatre ondes (103) générée dans le milieu optique non linéaire ; et
f) génération de la tension de commande dépendante de la lumière de mélange à quatre ondes extraite (103) ;
dans lequel la tension de commande sert à générer le signal d'horloge de telle sorte que le signal d'horloge et la lumière d'horloge (102) soient verrouillés en phase sur la lumière de signal à impulsions codées (101) et aient une fréquence d'horloge d'un N^{ième} de la fréquence d'horloge ou de N fois la fréquence d'horloge de la lumière de signal à impulsions codées, où N est un nombre entier.

2. Procédé de synchronisation d'une horloge optique sur un signal selon la revendication 1, dans lequel l'étape f) comprend en outre :
i) la génération d'un signal d'oscillation ;
ii) la conversion de la lumière de mélange à quatre ondes extraite en un signal électrique correspondant ;
iii) la dérivée de la différence de phase entre la lumière de signal à impulsions codées et la lumière d'horloge à partir du signal électrique correspondant à la lumière de mélange à quatre ondes ;
iv) la génération de la tension de commande en fonction de la différence de phase ; et
v) la modulation de la phase du signal d'horloge par le signal d'oscillation.

3. Procédé de démultiplexage d'un signal multiplexé par répartition dans le temps, comportant les étapes de fourniture d'une horloge optique ; et de synchronisation de l'horloge optique au moyen d'un procédé de synchronisation selon la revendication 1,
dans lequel la lumière de signal à impulsions codées (101) comprend N signaux multiplexés par répartition dans le temps dont au moins un doit être démultiplexé ; et le signal d'horloge est généré pour avoir une fréquence d'un N^{ième} de la fréquence d'horloge de la lumière de signal (101) et égale à la fréquence d'horloge du signal multiplexé à démultiplexer ; et
dans lequel l'étape e) comprend en outre :
i) la division de la lumière de mélange à quatre ondes extraite en des première et deuxième lumières de mélange à quatre ondes ayant une fréquence d'horloge d'un N^{ième} de celle de la lumière de signal ; et
ii) la fourniture de la première lumière de mélange à quatre ondes comme lumière de sortie démultiplexée ; et
dans lequel à l'étape f) c'est la deuxième lumière de mélange à quatre ondes qui est utilisée pour générer la tension de commande ; la tension de commande étant utilisée pour générer le signal d'horloge de telle sorte que le signal d'horloge et la lumière d'horloge soient verrouillées en phase sur la lumière de signal à impulsions codées et aient une fréquence d'un N^{ième} de la fréquence d'horloge de la lumière de signal, où N est un nombre entier.

4. Procédé de démultiplexage d'un signal multiplexé par répartition dans le temps, comportant les étapes de fourniture d'une horloge optique ; et de synchronisation de l'horloge optique au moyen d'un procédé de synchronisation selon la revendication 1,
dans lequel la lumière de signal à impulsions codées (101) comprend N signaux multiplexés par répartition dans le temps dont au moins un doit être démultiplexé ; la lumière de signal à impulsions codées ayant une composante parallèle à la lumière d'horloge (104b) et une composante orthogonale (105b) à la lumière d'horloge ; et dans lequel le signal d'horloge est généré pour avoir une fréquence d'un N^{ième} de la fréquence d'horloge de la lumière de signal (101) et égale à la fréquence d'horloge du signal multiplexé à démultiplexer ; et
dans lequel à l'étape d) du procédé de synchronisation les composantes (104b, 105b) de la lumière de signal à impulsions codées (101) sont décalées dans le milieu optique non linéaire par des quantités différentes ;
dans lequel à l'étape f) du procédé de synchronisation, la tension de commande sert à générer le signal d'horloge de telle sorte que le signal d'horloge et la lumière d'horloge soient verrouillés en phase sur la lumière de signal à impulsions codées et aient une fréquence d'un N^{ième} de la fréquence d'horloge de la lumière de signal, où N est un nombre entier ;
le procédé comprenant aussi les étapes suivantes :
g) extraction, à partir des lumières de sortie du milieu optique non linéaire, de la lumière de signal (101) comprenant les composantes de signal déphasées (104b, 105b) ;
h) réception de la lumière de signal extraite (101) afin de produire une lumière de signal commutée (106) et une lumière de signal non commutée (107), dans lequel la lumière de signal commutée (106) est fournie comme sortie, la lumière de signal commutée représentant le N signal multiplexé par répartition dans le temps (106), et étant obtenue quand la différence de phase entre les composantes (104b, 105b) de la lumière de signal est π, et la lumière de signal non commutée, représentant les N-1 signaux multiplexés par répartition dans le temps restants (107), et étant obtenue quand la différence de phase entre les composantes de la lumière de signal est nulle.

5. Procédé de démultiplexage d'un signal multiplexé par répartition dans le temps, comportant les étapes de fourniture d'une horloge optique ; et de synchronisation de l'horloge optique au moyen d'un procédé de synchronisation selon la revendication 1,
dans lequel la lumière de signal à impulsions codées (101) comprend N signaux multiplexés par répartition dans le temps dont au moins un doit être démultiplexé ; et le signal d'horloge est généré pour avoir une fréquence d'un N^{ième} de la fréquence d'horloge de la lumière de signal (101) et égale à la fréquence d'horloge du signal multiplexé à démultiplexer ;
dans lequel l'étape c) comprend la division de la lumière de signal à impulsions codées et de la lumière d'horloge combinées en des première et deuxième lumières de signal à impulsions codées (104c, 105c) et lumières d'horloge (102) combinées ;
et à l'étape d) du procédé de synchronisation, ce sont les premières lumière de signal à impulsions codées (104c) et lumière d'horloge qui sont appliquées au milieu optique non linéaire (4) la phase de la première lumière de signal à impulsions codées (104c) étant décalée dans le milieu optique non linéaire en fonction de l'intensité de crête de la première lumière d'horloge, et
dans lequel à l'étape f) du procédé de synchronisation, la tension de commande sert à générer le signal d'horloge de telle sorte que le signal d'horloge et la lumière d'horloge soient verrouillés en phase sur la lumière de signal à impulsions codées et aient une fréquence d'un N^{ième} de la fréquence d'horloge de la lumière de signal, où N est un nombre entier ;
le procédé comprenant aussi les étapes suivantes :
g) extraction, à partir des lumières de sortie du milieu optique non linéaire, de la lumière de signal déphasée (104c) ;
h) extraction, à partir des deuxièmes lumière de signal à impulsions codées (105c) et lumière d'horloge combinées, de la lumière de signal qui est une lumière de signal non déphasée (105c) ; et
i) réception de la lumière de signal déphasée extraite (104c) et de la lumière de signal non déphasée (105c) afin de produire une lumière de signal commutée (106) et une lumière de signal non commutée (107), dans lequel la lumière de signal commutée (106) est fournie comme sortie, la lumière de signal commutée représentant le N signal multiplexé par répartition dans le temps (106), et étant obtenue quand la différence de phase entre la lumière de signal déphasée (101) et la lumière de signal non déphasée est π, et la lumière de signal non commutée représentant les N-1 signaux multiplexés par répartition dans le temps restants (107) et étant obtenue quand la différence de phase entre la lumière de signal déphasée (101) et la lumière de signal non déphasée est nulle.

6. Dispositif de synchronisation d'une horloge optique sur un signal, destiné à être utilisé dans le procédé de la revendication 1, comprenant :
un oscillateur commandé en tension (VCO) (10) pour générer un signal d'horloge d'une fréquence dépendante d'une tension de commande ;
un générateur de lumière d'horloge (11), pour recevoir le signal d'horloge provenant du VCO comme entrée et pour générer, en réponse au signal d'horloge, une lumière d'horloge (102), représentée par une lumière modulée en intensité, qui est synchrone avec le signal d'horloge ;
un coupleur optique (1) pour combiner une lumière de signal à impulsions codées (101) et la lumière d'horloge (102) sortie du générateur de lumière d'horloge (11) ;
un milieu optique non linéaire (4) pour recevoir la lumière de signal à impulsions codées et la lumière d'horloge combinées à partir du coupleur optique et pour générer un nombre de lumières de sortie (101, 102, 103) où au moins l'une des lumières de sortie est une lumière de mélange à quatre ondes (103), la valeur de puissance moyenne dans le temps de la lumière de mélange à quatre ondes étant une mesure de la différence de phase entre la lumière d'horloge et la lumière de signal à impulsions codées ;
un filtre optique (5) pour extraire à partir des lumières de sortie du milieu optique non linéaire la lumière de mélange à quatre ondes (103) générée dans le milieu optique non linéaire (4) ;
un convertisseur optoélectronique (8) pour recevoir la lumière de mélange à quatre ondes (103) extraite et la convertir en un signal électrique correspondant ;
un circuit de commande (9) pour recevoir le signal électrique depuis le convertisseur optoélectronique (8) et pour appliquer la tension de commande en fonction du signal électrique au VCO (10) afin de générer le signal d'horloge de telle sorte que le signal d'horloge et la lumière d'horloge (02) soient verrouillés en phase sur la lumière de signal à impulsions codées (101) et aient une fréquence d'horloge d'un N^{ième} de la fréquence d'horloge ou de N fois la fréquence d'horloge de la lumière de signal à impulsions codées, où N est un nombre entier.

7. Dispositif de synchronisation d'une horloge optique sur un signal selon la revendication 6, comprenant en outre :
un oscillateur (19) pour générer un signal d'oscillation ;
un comparateur de phase (20) pour recevoir la lumière de mélange à quatre ondes extraite et le signal d'oscillation et pour dériver la différence de phase entre la lumière de signal et la lumière d'horloge ;et
un modulateur de phase (21) pour moduler la phase du signal d'horloge par le signal d'oscillation.

8. Dispositif de synchronisation d'une horloge optique sur un signal selon la revendication 6, dans lequel le générateur de lumière d'horloge (11) comprend en outre :
un laser à semi-conducteur (13) pour émettre de la lumière ;
un modulateur optique en LiNbO₃ (14) pour moduler la lumière afin de générer la lumière d'horloge ;
un circuit d'excitation (15) pour exciter le modulateur optique en LiNbO₃ par réception du signal d'horloge ; et
des circuits de polarisation (17, 18) pour polariser le modulateur optique en LiNbO₃.

9. Dispositif de synchronisation d'une horloge optique sur un signal selon la revendication 9, dans lequel les circuits de polarisation pour polariser le modulateur optique en LiNbO₃ comprennent des premier (17) et deuxième (18) circuits de polarisation, dans lequel
les premier (17) et deuxième (18) circuits de polarisation servent à régler le point de fonctionnement du modulateur optique en LiNbO₃ et à superposer un signal de modulation d'intensité sur la lumière d'horloge (102).

10. Dispositif de démultiplexage d'un signal multiplexé par répartition dans le temps comprenant : un dispositif de synchronisation d'une horloge optique selon la revendication 6 ; et,
un moyen pour fournir une lumière de signal à impulsions codées (101) comprenant N signaux multiplexés par répartition dans le temps dont au moins un doit être démultiplexé ;
dans lequel l'oscillateur commandé en tension (VCO) (10) génère le signal d'horloge de telle sorte qu'il ait une fréquence d'un N^{ième} de la fréquence d'horloge de la lumière de signal et égale à la fréquence d'horloge du signal multiplexé à démultiplexer ;
le dispositif comprenant aussi un coupleur optique (2) pour recevoir la lumière de mélange à quatre ondes extraite du filtre optique et pour la diviser en des première et deuxième lumières de mélange à quatre ondes ayant une fréquence d'horloge d'un N^{ième} de la fréquence de la lumière de signal, dans lequel la première lumière de mélange à quatre ondes est fournie somme sortie ; et dans lequel le circuit de commande (9) applique une tension de commande au VCO (10) afin de générer le signal d'horloge de telle sorte que le signal d'horloge et la lumière d'horloge soient verrouillés en phase sur la lumière de signal à impulsions codées et aient une fréquence d'un N^{ième} de la fréquence d'horloge de la lumière de signal, où N est un nombre entier.

11. Dispositif de démultiplexage d'un signal multiplexé par répartition dans le temps comprenant un dispositif de synchronisation d'une horloge optique selon la revendication 6 ; et,
un moyen pour fournir une lumière de signal à impulsions codées (101) comprenant N signaux multiplexés par répartition dans le temps dont au moins un doit être démultiplexé ; la lumière de signal à impulsions codées ayant une composante parallèle à la lumière d'horloge (104b) et une composante orthogonale (105b) à la lumière d'horloge ;
dans lequel l'oscillateur commandé en tension (VCO) (10) génère le signal d'horloge de telle sorte qu'il ait une fréquence d'un N^{ième} de la fréquence d'horloge du signal et égale à la fréquence d'horloge des signaux multiplexés à démultiplexer ; et
le circuit de commande (9) applique une tension de commande au VCO (10) afin de générer le signal d'horloge de telle sorte que le signal d'horloge et la lumière d'horloge soient verrouillés en phase sur la lumière de signal à impulsions codées et aient une fréquence d'un N^{ième} de la fréquence d'horloge de la lumière de signal, où N est un nombre entier ;
dans lequel dans le milieu optique non linéaire, les composantes (104b, 105b) de la lumière de signal à impulsions codées (101) sont décalées par des quantités différentes ;
le dispositif comprenant aussi un deuxième filtre optique (6b) pour recevoir les lumières de sortie depuis le milieu optique non linéaire et pour extraire de celles-ci uniquement la lumière de signal (101) comprenant les composantes déphasées (104b, 105b) ;
un diviseur de faisceau de polarisation pour recevoir la lumière de signal extraite (101) et pour produire une lumière de signal commutée (106) et une lumière de signal non commutée (107), dans lequel la lumière de signal commutée (106) est fournie comme sortie, la lumière de signal commutée représentant le N signal multiplexé par répartition dans le temps (106), et étant obtenue quand la différence de phase entre les composantes de la lumière de signal est π, et la lumière de signal non commutée, représentant les N-1 signaux multiplexés par répartition dans le temps restants (107), et étant obtenue quand la différence de phase entre les composantes de la lumière de signal est nulle.

12. Dispositif de démultiplexage d'un signal multiplexé par répartition dans le temps comprenant : un dispositif de synchronisation d'une horloge optique selon la revendication 6 ; et,
un moyen pour fournir une lumière de signal à impulsions codées (101) comprenant N signaux multiplexés par répartition dans le temps dont au moins un doit être démultiplexé ;
dans lequel l'oscillateur commandé en tension (VCO) (10) génère le signal d'horloge de telle sorte qu'il ait une fréquence d'un N^{ième} de la fréquence d'horloge de la lumière de signal et égale à la fréquence d'horloge des signaux multiplexés à démultiplexer ;
le circuit de commande (9) appliquant une tension de commande au VCO (10) afin de générer le signal d'horloge de telle sorte que le signal d'horloge et la lumière d'horloge soient verrouillés en phase sur la lumière de signal à impulsions codées et aient une fréquence d'un N^{ième} de la fréquence d'horloge de la lumière de signal, où N est un nombre entier ; et
le coupleur optique sert aussi à diviser la lumière de signal à impulsions codées (104) et la lumière d'horloge en des première et deuxième lumières de signal à impulsions codées (104c, 105c) et lumières d'horloge combinées ;
dans lequel dans le milieu optique non linéaire, la phase de la première lumière de signal à impulsions codées (104c) est décalée en fonction de l'intensité de crête de la première lumière d'horloge ;
le dispositif comprenant en outre un deuxième filtre optique (6b) pour recevoir les lumières de sortie du milieu optique non linéaire et pour extraire de celles-ci uniquement la lumière de signal déphasée (101) ;
un troisième filtre optique (6c) pour recevoir les deuxièmes lumière de signal à impulsions codées et lumière d'horloge du coupleur optique (1) et pour extraire uniquement la deuxième lumière de signal (105c) qui est une lumière de signal non déphasée (105c) ;
un deuxième coupleur optique (3) pour recevoir la lumière de signal déphasée extraite (104c) et la lumière de signal non déphasée (105c) afin de produire une lumière de signal commutée (106) et une lumière de signal non commutée (107), dans lequel la lumière de signal commutée (106) est fournie comme sortie, la lumière de signal commutée représentant le N signal multiplexé par répartition dans le temps (106), et étant obtenue quand la différence de phase entre la lumière de signal déphasée (101) et la lumière de signal non déphasée est π, et la lumière de signal non commutée, représentant les N-1 signaux multiplexés par répartition dans le temps restants (107) et étant obtenue quand la différence de phase entre la lumière de signal déphasée (101) et la lumière de signal non déphasée est nulle.

13. Procédé de démultiplexage d'un signal multiplexé par répartition dans le temps, comprenant les étapes suivantes :
a) fourniture d'un lumière de signal à impulsions codées (101) comprenant N signaux multiplexés par répartition dans le temps ;
b) division de la lumière de signal à impulsions codées (101) en des première (104) et deuxième (105) lumières de signal à impulsions codées ;
c) génération d'un signal d'horloge d'une fréquence d'un N^{ième} de la fréquence d'horloge de la lumière de signal (101) et égale à la fréquence d'horloge du signal multiplexé à démultiplexer ;
d) génération, en réponse au signal d'horloge, d'une lumière d'horloge (102), représentée par une lumière modulée en intensité qui est synchronisée avec le signal d'horloge et qui correspond en cadencement à l'un des N signaux multiplexés par répartition dans le temps ;
e) combinaison de la première lumière de signal à impulsions codées (104) comprenant les N signaux multiplexés par répartition dans le temps et de la lumière d'horloge (102) correspondant en cadencement à l'un desdits N signaux multiplexés par répartition dans le temps ;
f) fourniture des premières lumière de signal à impulsions codées et lumière d'horloge combinées à un milieu optique non linéaire (4) de telle sorte qu'au moins une lumière de mélange à quatre ondes (103) soit générée dans le milieu optique non linéaire (4) et que la phase de la première lumière de signal à impulsions codées (104) soit décalée en fonction de l'intensité de crête de la lumière d'horloge, la valeur de puissance moyenne dans le temps de la lumière de mélange à quatre ondes étant une mesure de la différence de phase entre la lumière d'horloge et la lumière de signal à impulsions codées ;
g) réception, à partir du milieu optique non linéaire (4) de la lumière d'horloge (102), de la lumière de mélange à quatre ondes (103) générée dans le milieu optique non linéaire, et de la première lumière de signal à impulsions codées (104) déphasée en fonction de l'intensité de crête de la lumière d'horloge (102) ;
h) forçage de l'interférence par la première lumière de signal à impulsions codées (104) déphasée en fonction de l'intensité crête de la lumière d'horloge avec la deuxième lumière de signal à impulsions codées (105) de manière à obtenir une lumière de signal commutée (106) et une lumière de signal non commutée (107), la lumière de signal commutée représentant le N signal multiplexé par répartition dans le temps (106), et étant obtenue lorsque les première (104) et deuxième (105) lumières de signal ont une différence de phase de π, et la lumière de signal non commutée représentant les N-1 signaux multiplexés par répartition dans le temps restants (107), et étant obtenue lorsque les première (104) et deuxième (105) lumières de signal ont une différence de phase nulle ;
i) fourniture de la lumière de signal non commutée (107), de la lumière d'horloge (102) et la lumière de mélange à quatre ondes (103) comme sortie à démultiplexer ;
j) séparation de la lumière de signal commutée (106) de la lumière d'horloge (102) et de la lumière de mélange à quatre ondes (103) ;
k) fourniture de la lumière de signal commutée (106) ainsi séparée comme sortie représentant une lumière de signal démultiplexé ;
l) séparation de la lumière de mélange à quatre ondes (103) de la lumière de signal commutée (106) et de la lumière d'horloge (102) ; et
m) génération d'une tension de commande en fonction de la lumière de mélange à quatre ondes ainsi séparée (103) ;
dans lequel la tension de commande sert à générer le signal d'horloge de telle sorte que le signal d'horloge et la lumière d'horloge soient verrouillés en phase sur le signal à impulsions codées et aient une fréquence d'un N^{ième} de la fréquence d'horloge de la lumière de signal, où N est un nombre entier.

14. Procédé selon la revendication 13, dans lequel la première lumière de signal à impulsions codées et la deuxième lumière de signal à impulsions codées sont entrées à l'étape h) dans un coupleur optique de manière à interférer pour produire des lumières de signal commutée (106) et non commutée (107).

15. Procédé selon la revendication 13, dans lequel la première lumière de signal à impulsions codées et la deuxième lumière de signal à impulsions codées sont entrées à l'étape h) dans un diviseur de faisceau de polarisation de manière à interférer pour produire des lumières de signal commutée (106) et non commutée (107).

16. Dispositif de démultiplexage d'un signal multiplexé par répartition dans le temps, comprenant :
un moyen pour fournir une lumière de signal à impulsions codées (101) comprenant N signaux multiplexés par répartition dans le temps ;
un coupleur optique (2) pour diviser la lumière de signal à impulsions codées en des première (104) et deuxième (105) lumières de signal à impulsions codées ;
un oscillateur commandé en tension (VCO) (10) pour générer un signal d'horloge d'une fréquence d'un N^{ième} de la fréquence d'horloge de la lumière de signal et égale à la fréquence d'horloge du signal démultiplexé à démultiplexer ;
un générateur de lumière d'horloge (11), pour recevoir le signal d'horloge du VCO comme entrée et pour générer, en réponse au signal d'horloge, une lumière d'horloge (102) modulée en intensité, qui est synchrone avec le signal d'horloge ;
un coupleur optique (1) pour combiner la première lumière de signal à impulsions codées (104) et la lumière d'horloge (102) sortie du générateur de lumière d'horloge (11) ;
un milieu optique non linéaire (4) pour :
a) recevoir les premières lumière de signal à impulsions codées (104) et lumière d'horloge (102) combinées du coupleur optique et pour générer un nombre de lumières de sortie (104, 102, 103) dans lequel au moins l'une des lumières de sortie est une lumière de mélange à quatre ondes (103) et dans lequel la phase de la première lumière de signal à impulsions codées (104) est décalée en fonction de l'intensité de crête de la lumière d'horloge, la valeur de puissance moyenne dans le temps de la lumière de mélange à quatre ondes étant une mesure de la différence de phase entre la lumière d'horloge et la lumière de signal à impulsions codées ; et
b) recevoir la deuxième lumière de signal à impulsions codées (105) ;
un moyen pour forcer l'interférence des première (104) et deuxième (105) lumières de signal à impulsions codées, produisant ainsi une lumière de signal commutée (106) et une lumière de signal non commutée (107) ;
dans lequel la lumière de signal à impulsions codées déphasée (104), la lumière d'horloge (102) et la lumière de mélange à quatre ondes (103), et la deuxième lumière de signal à impulsions codées (105) sont fournies au moyen de forçage des première (104) et deuxième lumières de signal à impulsions codées afin de produire une lumière de signal commutée (106) et une lumière de signal non commutée (107), la lumière de signal commutée représentant le N signal multiplexé par répartition dans le temps (106), et étant obtenue lorsque les première (104) et deuxième (106) lumières de signal ont une différence de phase de π, et la lumière de signal non commutée représentant les N-1 signaux multiplexés par répartition dans le temps restants (107), et étant obtenue lorsque les première (104) et deuxième (105) lumières de signal ont une différence de phase nulle ;
un coupleur optique (3) pour recevoir la lumière de signal commutée (106), la lumière d'horloge (102) et la lumière de mélange à quatre ondes (103) et diviser celles-ci en des première et deuxième lumières de sortie ;
un filtre optique (6) pour recevoir la première lumière de sortie du coupleur optique (3) et pour extraire de la première lumière de sortie uniquement la lumière de signal commutée (106) à fournir comme sortie de signal démultiplexé ;
un filtre optique (5) pour recevoir la deuxième lumière de sortie du coupleur optique (3) et pour extraire de la deuxième lumière de sortie uniquement la lumière de signal à quatre ondes (103) ;
un convertisseur optoélectronique (8) pour recevoir la lumière de mélange à quatre ondes extraite (103) du filtre optique (3) et pour la convertir en un signal électrique correspondant ;
un circuit de commande (9) pour recevoir le signal électrique du convertisseur optoélectronique (8) et pour appliquer une tension de commande dépendante du signal électrique au VCO (10) afin de générer le signal d'horloge de telle sorte que le signal d'horloge et la lumière d'horloge soient verrouillés en phase sur le signal à impulsions codées et aient une fréquence d'un N^{ième} de la fréquence d'horloge de la lumière de signal, où N est un nombre entier.

17. Dispositif selon la revendication 16, dans lequel le moyen de forçage de l'interférence de la première lumière de signal à impulsions codées et de la deuxième lumière de signal à impulsions codées est un coupleur optique.

18. Dispositif selon la revendication 17, dans lequel le coupleur optique utilisé pour forcer l'interférence des première et deuxième lumières de signal à impulsions codées est le même coupleur optique (2) que celui utilisé pour diviser la lumière de signal à impulsions codées en des première (104) et deuxième (105) lumières de signal à impulsions codées.

19. Dispositif selon la revendication 16, dans lequel le moyen de forçage de l'interférence de la première lumière de signal à impulsions codées et de la deuxième lumière de signal à impulsions codées est un diviseur de faisceau de polarisation.

20. Dispositif selon la revendication 16, dans lequel les première (104) et deuxième (105) lumières de signal à impulsions codées se propagent dans des sens opposés à travers le milieu optique non linéaire.
